# EUROPEAN PATENT APPLICATION

(11) **EP 4 783 642 A1**
(43) Date of publication of application: **29.07.2026**
(21) Application number: 24884632.1
(22) Date of filing: 28.10.2024
(51) Int. Cl.: H04W 24/00

(54) **COMMUNICATION METHOD AND COMMUNICATION APPARATUS**

(30) Priority: 31.10.2023 CN 202311441602
(71) Applicant: HUAWEI TECHNOLOGIES CO., LTD., Shenzhen 518129 (CN)
(72) Inventor: HU, Xingxing, Shenzhen, Guangdong 518129 (CN)
(74) Representative: Maiwald GmbH
(86) International application number: PCT/CN2024/127626
(87) International publication number: WO 2025/092629

(57) **Abstract**

This application provides a communication method and a communication apparatus, and relates to the communication field. The method provided in this application helps associate an application layer measurement result with a radio side measurement result, and facilitates measurement information collection and network quality maintenance on a network side. The method includes: A first access network device determines first information and second information, where the first information indicates to perform application layer measurement on a first service, and the second information indicates to report an identifier of the first service; the first access network device sends the first information and the second information to a terminal device; the terminal device receives the first information and the second information from the first access network device; and the terminal device sends a first application layer measurement result of the first service and the identifier of the first service.

## Description

This application claims priority to Chinese Patent Application No. 202311441602.6, filed with the China National Intellectual Property Administration on October 31, 2023 and entitled "COMMUNICATION METHOD AND COMMUNICATION APPARATUS", which is incorporated herein by reference in its entirety.

### TECHNICAL FIELD

This application relates to the communication field, and in particular, to a communication method and a communication apparatus.

### BACKGROUND

Radio side measurement is an important means for monitoring network quality. An operator may collect, through radio side measurement, network signal strength, quality, coverage, and the like that are measured by a terminal device and/or an access network device, and optimize a problem and a fault in a radio network based on a radio side measurement result, to provide better network quality for a user. Application layer measurement refers to measurement performed on performance of a type of service such as some streaming services or voice services subscribed to by the terminal device, so that an operator can better understand user service experience, thereby optimizing network quality corresponding to the service, and meeting a more refined quality experience requirement when a user uses these services. In this way, user experience is enhanced with greater precision.

However, user-side quality experience of a service cannot be obtained through radio layer measurement alone, and overall network quality of the user cannot be obtained through application layer measurement alone, which is not conducive to problem locating when service quality experience is poor, and brings troubles to maintenance and management of the operator. Therefore, this problem can be resolved by associating the radio side measurement result with an application layer measurement result.

However, at present, it is difficult to associate the radio side measurement result with the application layer measurement result, which is not conducive to measurement information collection and network quality maintenance on a network side, and consequently, it is difficult to provide a more refined network service for the user.

### SUMMARY

This application provides a communication method and a communication apparatus, to help associate an application layer measurement result with a radio side measurement result, facilitate measurement information collection and network quality maintenance on a network side, and provide a possibility that the network side can provide a more refined network service for a user.

According to a first aspect, this application provides a communication method, including: A first access network device determines first information and second information, where the first information indicates to perform application layer measurement on a first service, and the second information indicates to report an identifier of the first service; and the first access network device sends the first information and the second information to a terminal device.

In embodiments of this application, the first access network device obtains, by sending the second information to the terminal device, the identifier of the first service used to associate an application layer measurement result with a radio side measurement result. This is not limited by whether an access network device can indicate the terminal device to report an application layer measurement result visible to the access network device, and is not limited by whether the terminal device can support reporting of the application layer measurement result visible to the access network device. In other words, the identifier can be obtained without the need of a case in which the terminal device includes the identifier of the first service in the application layer measurement result visible to the access network device. This helps decouple a necessary relationship between "the terminal device reports the application layer measurement result visible to the access network device" and "associating the application layer measurement result with the radio side measurement result". When the application layer measurement result needs to be associated with the radio side measurement result, a capability of the access network device and/or the terminal device does not need to be depended on. This helps associate the application layer measurement result with the radio side measurement result, facilitates measurement information collection and network quality maintenance on a network side, and provides a possibility for the network side to provide a more refined network service for a user.

With reference to the first aspect, in some implementations of the first aspect, the first access network device receives a first application layer measurement result of the first service from the terminal device; the first access network device receives a radio side measurement identifier from a second access network device, where the radio side measurement identifier is an identifier corresponding to radio side measurement associated with an access network device bearing the first service and the terminal device; and the first access network device sends the radio side measurement identifier and the first application layer measurement result to a server.

It should be understood that the first access network device and the second access network device are access network devices that form dual connectivity with the terminal device.

In embodiments of this application, the first access network device that receives the first application layer measurement result may obtain, from another access network device in a dual connectivity scenario, the identifier corresponding to the radio side measurement associated with the access network device bearing the first service and the terminal device, and send the radio side measurement identifier and the first application layer measurement result to the server. This helps the server associate the first application layer measurement result with the radio side measurement result by using the radio side measurement identifier.

With reference to the first aspect, in some implementations of the first aspect, the method further includes: The first access network device receives the identifier of the first service from the terminal device; and the first access network device sends a radio side measurement identifier to a second access network device based on the identifier of the first service, where the radio side measurement identifier is an identifier corresponding to radio side measurement associated with an access network device bearing the first service and the terminal device.

In embodiments of this application, the access network device that receives the identifier of the first service may determine, based on the identifier of the first service, the identifier corresponding to the radio side measurement associated with the access network device bearing the first service and the terminal device, and send the identifier to the access network device that receives the application layer measurement result. This helps report the radio side measurement identifier corresponding to the first application layer measurement result while reporting the first application layer measurement result, and helps a network side analyze the measurement result and optimize network quality.

With reference to the first aspect, in some implementations of the first aspect, the method further includes: The first access network device receives a first application layer measurement result of the first service and the identifier of the first service that are from the terminal device; and the first access network device sends a radio side measurement identifier and the first application layer measurement result to a server based on the identifier of the first service, where the radio side measurement identifier is an identifier corresponding to radio side measurement associated with an access network device bearing the first service and the terminal device.

With reference to the first aspect, in some implementations of the first aspect, if a data packet corresponding to the identifier of the first service is processed only by a radio link control RLC entity and a media access control MAC entity of the first access network device, the radio side measurement identifier is a first identifier corresponding to radio side measurement associated with the first access network device and the terminal device.

With reference to the first aspect, in some implementations of the first aspect, if a data packet corresponding to the identifier of the first service is processed only by an RLC entity and a MAC entity of a second access network device, the radio side measurement identifier is a second identifier corresponding to radio side measurement associated with the second access network device and the terminal device.

With reference to the first aspect, in some implementations of the first aspect, if a data packet corresponding to the identifier of the first service is processed by an RLC entity of the first access network device, a MAC entity of the first access network device, an RLC entity of the second access network device, and a MAC entity of the second access network device, the radio side measurement identifier includes a first identifier and a second identifier, the first identifier corresponds to radio side measurement associated with the first access network device and the terminal device, and the second identifier corresponds to radio side measurement associated with the second access network device and the terminal device.

In embodiments of this application, a method for determining a bearer node of a first service based on an identifier of the first service is provided. In this way, when obtaining the identifier of the first service corresponding to application layer measurement, an access network device may determine, based on the identifier of the first service, an access network device bearing the first service, and obtain a radio side measurement identifier from the access network device bearing the first service. This helps associate an application layer measurement result with a radio side measurement result.

With reference to the first aspect, in some implementations of the first aspect, before the sending the radio side measurement identifier, the method further includes: The first access network device sends a first request to the second access network device, where the first request is used to request the second identifier; and the first access network device receives the second identifier from the second access network device.

In embodiments of this application, when the first access network device determines that the access network device bearing the first service includes the second access network device, the second identifier corresponding to radio side measurement associated with the second access network device and the terminal device is obtained from the second access network device by using the second request. This helps obtain all radio side measurement identifiers corresponding to a current application layer measurement result, and helps improve accuracy and reliability of a subsequent analysis result.

With reference to the first aspect, in some implementations of the first aspect, the method further includes: The first access network device sends a second request to a second access network device, where the second request is used to request to change a reporting node of an application layer measurement result to the second access network device, and the second request carries the radio side measurement identifier.

In embodiments of this application, when the reporting node of the application layer measurement result changes and the changed node does not store the radio side measurement identifier, in a process in which the first access network device and the second access network device exchange a change request or after the change succeeds, an access network device that obtains a radio side measurement identifier in a previous reporting process sends the identifier to another access network device that forms dual connectivity with the terminal device, to avoid a case in which the two access network devices repeatedly perform a procedure of obtaining the radio side measurement identifier, thereby reducing computational power of the access network device, and improving efficiency of associating the application layer measurement result with the radio side measurement result.

With reference to the first aspect, in some implementations of the first aspect, the identifier of the first service includes a protocol data unit PDU session identifier, or a PDU session identifier and a quality of service QoS flow identifier.

It should be understood that there is a protocol data unit (protocol data unit, PDU for short) session connection between the terminal device and a core network to provide a data transmission service. The PDU session identifier may uniquely identify one PDU session. When only a QoS flow of the first service exists in one PDU session, the access network device bearing the first service may be determined through the PDU session identifier corresponding to the first service.

Further, when there are QoS flows of a plurality of services in one PDU session, an IP data flow of the first service may be uniquely determined through the PDU session identifier and the QoS flow identifier that are of the first service. This helps accurately determine the access network device bearing the first service.

According to a second aspect, this application provides a communication method. The method includes: A terminal device receives first information and second information from a first access network device, where the first information indicates to perform application layer measurement on a first service, and the second information indicates to report an identifier of the first service; and the terminal device sends a first application layer measurement result of the first service and the identifier of the first service.

With reference to the second aspect, in some implementations of the second aspect, the sending the first application layer measurement result of the first service and the identifier of the first service includes: The terminal device sends the first application layer measurement result of the first service and the identifier of the first service to the first access network device, or sends the first application layer measurement result of the first service to the first access network device and sends the identifier of the first service to a second access network device.

With reference to the second aspect, in some implementations of the second aspect, the identifier of the first service includes a protocol data unit PDU session identifier, or a PDU session identifier and a quality of service QoS flow identifier.

According to a third aspect, this application provides a communication method, including: A second access network device receives a second request from a first access network device, where the second request is used to request a second identifier, and the second identifier corresponds to radio side measurement associated with the second access network device and a terminal device; and the second access network device sends the second identifier to the first access network device.

With reference to the third aspect, in some implementations of the third aspect, the method further includes: receiving the second request from the first access network device, where the second request is used to request to change a reporting node of an application layer measurement result of a first service to the second access network device, and the second request carries the radio side measurement identifier.

According to a fourth aspect, this application provides a communication apparatus, including a transceiver module and a processing module. The processing module is configured to determine first information and second information, where the first information indicates to perform application layer measurement on a first service, and the second information indicates to report an identifier of the first service. The transceiver module is configured to send the first information and the second information to a terminal device.

Optionally, the transceiver module is further configured to: receive a first application layer measurement result of the first service from the terminal device; receive a radio side measurement identifier from a second access network device, where the radio side measurement identifier is an identifier corresponding to radio side measurement associated with an access network device bearing the first service and the terminal device; and send the radio side measurement identifier and the first application layer measurement result to a server.

Optionally, the transceiver module is further configured to receive the identifier of the first service from the terminal device; and the processing module is further configured to send a radio side measurement identifier to a second access network device based on the identifier of the first service, where the radio side measurement identifier is an identifier corresponding to radio side measurement associated with an access network device bearing the first service and the terminal device.

Optionally, the transceiver module is further configured to: receive a first application layer measurement result of the first service and the identifier of the first service that are from the terminal device; and send a radio side measurement identifier and the first application layer measurement result to a server based on the identifier of the first service, where the radio side measurement identifier is an identifier corresponding to radio side measurement associated with an access network device bearing the first service and the terminal device.

Optionally, if a data packet corresponding to the identifier of the first service is processed only by a radio link control RLC entity and a media access control MAC entity of the first access network device, the radio side measurement identifier is a first identifier corresponding to radio side measurement associated with the first access network device and the terminal device.

Optionally, if a data packet corresponding to the identifier of the first service is processed only by an RLC entity and a MAC entity of a second access network device, the radio side measurement identifier is a second identifier corresponding to radio side measurement associated with the second access network device and the terminal device.

Optionally, if a data packet corresponding to the identifier of the first service is processed by an RLC entity of the first access network device, a MAC entity of the first access network device, an RLC entity of the second access network device, and a MAC entity of the second access network device, the radio side measurement identifier includes a first identifier and a second identifier, the first identifier corresponds to radio side measurement associated with the first access network device and the terminal device, and the second identifier corresponds to radio side measurement associated with the second access network device and the terminal device.

Optionally, the transceiver module is further configured to: send a first request to the second access network device, where the first request is used to request the second identifier; and receive the second identifier from the second access network device.

Optionally, the transceiver module is further configured to send a second request to a second access network device, where the second request is used to request to change a reporting node of an application layer measurement result to the second access network device, and the second request carries the radio side measurement identifier.

Optionally, the identifier of the first service includes a protocol data unit PDU session identifier, or a PDU session identifier and a quality of service QoS flow identifier.

According to a fifth aspect, this application further provides a communication apparatus, including a transceiver module and a processing module. The transceiver module is configured to receive first information and second information from a first access network device, where the first information indicates to perform application layer measurement on a first service, and the second information indicates to report an identifier of the first service. The transceiver module is further configured to send a first application layer measurement result of the first service and the identifier of the first service.

Optionally, the transceiver module is further configured to: send the first application layer measurement result of the first service and the identifier of the first service to the first access network device, or send the first application layer measurement result of the first service to the first access network device and send the identifier of the first service to a second access network device.

Optionally, the identifier of the first service includes a protocol data unit PDU session identifier, or a PDU session identifier and a quality of service QoS flow identifier.

According to a sixth aspect, this application further provides a communication apparatus, including a transceiver module and a processing module. The transceiver module is configured to: receive a second request from a first access network device, where the second request is used to request a second identifier, and the second identifier corresponds to radio side measurement associated with the second access network device and a terminal device; and send the second identifier to the first access network device.

Optionally, the transceiver module is further configured to receive a second request from the first access network device, where the second request is used to request to change a reporting node of an application layer measurement result of a first service to the second access network device, and the second request carries the radio side measurement identifier.

According to a seventh aspect, this application provides another communication apparatus, including a processor. The processor is coupled to a memory and may be configured to execute instructions in the memory, to implement the method according to any one of the possible implementations of the first aspect, the second aspect, or the third aspect. Optionally, the apparatus further includes the memory. Optionally, the apparatus further includes a communication interface, and the processor is coupled to the communication interface.

According to an eighth aspect, a processor is provided, and includes an input circuit, an output circuit, and a processing circuit. The processing circuit is configured to: receive a signal through the input circuit, and transmit a signal through the output circuit, so that the processor performs the method according to any one of the possible implementations of the first aspect, the second aspect, or the third aspect.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of the processor and the various circuits are not limited in embodiments of this application.

According to a ninth aspect, a processing apparatus is provided, and includes a processor and a memory. The processor is configured to read instructions stored in the memory, receive a signal through a receiver, and transmit a signal through a transmitter, to perform the method according to any one of the possible implementations of the first aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, for example, a read-only memory (read-only memory, ROM). The memory and the processor may be integrated into a same chip, or may be separately disposed on different chips. A type of the memory and a manner in which the memory and the processor are disposed are not limited in embodiments of this application.

It should be understood that a related data exchange process, for example, sending indication information, may be a process of outputting the indication information from the processor, and receiving capability information may be a process of receiving input capability information by the processor. Specifically, data output by the processor may be output to the transmitter, and input data received by the processor may be from the receiver. The transmitter and the receiver may be collectively referred to as a transceiver.

The processing apparatus according to the ninth aspect may be a chip. The processor may be implemented by hardware or software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, or may be located outside the processor, and exists independently.

According to a tenth aspect, a computer program product is provided. The computer program product includes a computer program (which may also be referred to as code or instructions). When the computer program is run, a computer is enabled to perform the method according to any one of the possible implementations of the first aspect, the second aspect, or the third aspect.

According to an eleventh aspect, a computer-readable storage medium is provided. The computer-readable storage medium stores a computer program (which may also be referred to as code or instructions). When the computer program is run on a computer, the computer is enabled to perform the method according to any one of the possible implementations of the first aspect, the second aspect, or the third aspect.

### BRIEF DESCRIPTION OF DRAWINGS

FIG. 1 is a diagram of a communication system to which an embodiment of this application is applicable;
FIG. 2 is a diagram of a protocol stack according to an embodiment of this application;
FIG. 3 is a diagram of another protocol stack according to an embodiment of this application;
FIG. 4 is a schematic flowchart of a communication system according to an embodiment of this application;
FIG. 5 is a schematic flowchart of another communication system according to an embodiment of this application;
FIG. 6 is a schematic flowchart of still another communication system according to an embodiment of this application;
FIG. 7 is a schematic flowchart of still another communication system according to an embodiment of this application;
FIG. 8 is a block diagram of a communication apparatus according to an embodiment of this application; and
FIG. 9 is a block diagram of another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system, a new radio (new radio, NR) system, or another evolved communication system.

A terminal device in embodiments of this application may also be referred to as user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice/data connectivity for users, for example, a handheld device or a vehicle-mounted device that has a wireless connection function. Currently, examples of some terminals are as follows: a mobile phone (mobile phone), a tablet computer, a notebook computer, a handheld computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, a terminal device in a future evolved public land mobile network (public land mobile network, PLMN), and the like. This is not limited in embodiments of this application.

By way of example but not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and largesized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In addition, in embodiments of this application, the terminal device may alternatively be a terminal device in an internet of things (internet of things, IoT) system. An IoT is an important part of future development of information technologies, and a main technical feature of the IoT is to connect things to a network by using a communication technology, to implement an intelligent network for interconnection between a person and a machine or between things. The terminal device in this application may alternatively be a vehicle-mounted unit, a vehicle-mounted assembly, a vehicle-mounted component, a vehicle-mounted chip, or a vehicle-mounted unit that is built in a vehicle as one or more components or units. The vehicle may implement a method in this application by using the vehicle-mounted unit, the vehicle-mounted assembly, the vehicle-mounted component, the vehicle-mounted chip, or the vehicle-mounted unit that is disposed in the vehicle. Therefore, embodiments of this application may be applied to an internet of vehicles, for example, vehicle-to-everything (vehicle-to-everything, V2X), long term evolution-vehicle (long term evolution-vehicle, LTE-V), and vehicle-to-vehicle (vehicle-to-vehicle, V2V).

In addition, an access network device in embodiments of this application may also be referred to as a radio access network device, and may be a transmission reception point (transmission reception point, TRP), or may be an evolved NodeB (evolved NodeB, eNB, or eNodeB) in an LTE system, or may be a home NodeB (for example, a home evolved NodeB, or a home NodeB, HNB), a baseband unit (baseband unit, BBU), or may be a radio controller in a cloud radio access network (cloud radio access network, CRAN) scenario. Alternatively, the access network device may be a relay station, an access point, a vehicle-mounted device, a wearable device, an access network device in a 5G network, an access network device in a future evolved PLMN network, or the like, may be an access point (access point, AP) in a WLAN, may be a gNB in a new radio (new radio, NR) system, may be a satellite base station in a satellite communication system, or the like. This is not limited in embodiments of this application.

The access network device in embodiments of this application may include a central unit (central unit, CU) node, a distributed unit (distributed unit, DU) node, an access network device including a CU node and a DU node, or an access network device including a CU-control plane node (CU-CP node), a CU-user plane node (CU-UP node), and a DU node. The access network device including the CU node and the DU node may split protocol layers of the access network device. Functions of some protocol layers are centrally controlled by a CU, functions of some or all of the remaining protocol layers are distributed in a DU, and the CU centrally controls the DU. In an implementation, a radio resource control (radio Resource Control, RRC) layer, a packet data convergence protocol (packet data convergence protocol, PDCP) layer, and a service data adaptation protocol (service data adaptation protocol, SDAP) layer included in a protocol stack are deployed on a CU. A radio link control (radio link control, RLC) layer, a media access control (media access control, MAC) layer, and a physical layer (physical layer, PHY) in a protocol stack are deployed on a DU. Therefore, the CU has RRC, PDCP, and SDAP processing capabilities. The DU has RLC, MAC, and PHY processing capabilities. The foregoing function division is merely an example, and does not constitute a limitation on the CU and the DU. In other words, there may be another function division manner between the CU and the DU. Details are not described in embodiments of this application. Functions of the CU may be implemented by one entity or different entities. For example, the functions of the CU may be further divided. For example, a control plane (CP) and a user plane (UP) are separated, that is, a CU control plane (CU-CP) and a CU user plane (CU-UP) are separated. For example, the CU-CP and the CU-UP may be implemented by different functional entities. The CU-CP and the CU-UP may be coupled to the DU to jointly complete functions of the access network device. In a possible manner, the CU-CP is responsible for a control plane function, and mainly includes RRC and PDCP-C. The PDCP-C is mainly responsible for encryption and decryption of control plane data, integrity protection, data transmission, and the like. The CU-UP is responsible for a user plane function, and mainly includes SDAP and PDCP-U. The SDAP is mainly responsible for processing data of a core network device and mapping a data flow (flow) to a bearer. The PDCP-U is mainly responsible for encryption and decryption, integrity protection, header compression, sequence number maintenance, data transmission, and the like on a data plane. The CU-CP and the CU-UP are connected through an E1 interface. The CU-CP represents that the access network device is connected to the core network device through an interface between the core network device and the access network device, and is connected to the DU through F1-C (control plane). The CU-UP is connected to the DU through F1-U (user plane). In addition, in another possible implementation, the PDCP-C is alternatively in the CU-UP. This is not limited in this application.

In embodiments of this application, the core network device is a device in a core network (core network, CN) that provides service support for a terminal device. Currently, the core network device may be an access and mobility management function (access and mobility management function, AMF) entity, a session management function (session management function, SMF) entity, a user plane function (user plane function, UPF) entity, and the like, which are not listed one by one herein. The AMF entity may be responsible for access management and mobility management of the terminal device. The SMF entity may be responsible for session management, for example, session establishment of a user. The UPF entity may be a functional entity on the user plane, and is mainly responsible for a connection to an external network. It should be noted that, the entity in this application may also be referred to as a network element or a functional entity. For example, the AMF entity may also be referred to as an AMF network element or an AMF functional entity. For another example, the SMF entity may also be referred to as an SMF network element or an SMF functional entity. This is not limited in this application.

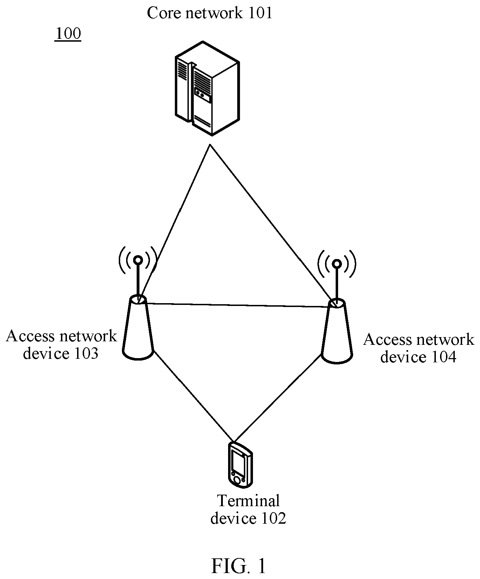

FIG. 1 is a diagram of a communication system 100 to which an embodiment of this application is applicable. As shown in FIG. 1, the communication system 100 includes a core network device 101, a terminal device 102, an access network device 103, and an access network device 104. The core network device 101 may be a core network that provides service support for the terminal device 102. The core network may provide a connection for the terminal device 102, manage the terminal device 102, and complete service bearing, and serves as a bearer network to provide an interface to an external network. The terminal device 101 can communicate with the access network device 103 and the access network device 104, that is, dual connectivity (dual connectivity, DC). The terminal device 102 may receive a transmission resource (for example, a frequency domain resource or a spectrum resource) through the access network device 103 or the access network device 104 for communicating with a cell. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells have features of small coverage and low transmit power, and are applicable to providing a high-rate data transmission service.

It should be understood that the access network device 103 and the access network device 104 that communicate with the terminal device 101 may be base stations that belong to a same radio access technology (radio access technology, RAT) (for example, both the access network device 103 and the access network device 104 are 4G base stations or both are 5G base stations), or the access network device 103 and the access network device 104 may be base stations that belong to different RATs (for example, one of the access network device 103 and the access network device 104 is a 4G base station, and the other is a 5G base station). Therefore, the DC is also referred to as multi-radio access technology dual connectivity (multi-RAT dual connectivity, MR-DC).

In a possible implementation, one of the two access network devices in an MR-DC scenario is referred to as a master node (master node, MN), and the other is referred to as a secondary node (secondary node, SN). It should be noted that the MR-DC is specific to a terminal device. The master node may provide a control plane connection between the terminal device and a core network for the terminal device, and the secondary node may not provide a control plane connection between the terminal device and the core network for the terminal device. For example, the access network device 103 may be a master node in a dual connectivity scenario, and the access network device 104 may be a secondary node in the dual connectivity scenario.

The following describes in detail a form of the MR-DC and a network side protocol stack by using an example in which an access network device is a base station and a terminal device is a UE.

According to radio carrier communication standards used by the master node and the secondary node, the MR-DC may include: evolved universal terrestrial radio access new radio dual connectivity (E-UTRAN new radio dual connectivity, EN-DC), next generation radio access network evolved universal terrestrial radio access new radio dual connectivity (next generation RAN E-UTRA new radio-dual connectivity, NGEN-DC), new radio evolved universal terrestrial radio access dual connectivity (new radio E-UTRAN dual connectivity, NE-DC), and new radio dual connectivity (new radio dual connectivity, NR-DC). In the EN-DC, a master node is an LTE base station (for example, an eNB) connected to a 4G core network EPC, and a secondary node is an NR base station (for example, a gNB). In the NGEN-DC, a master node is an LTE base station connected to a 5G core network 5GC, and a secondary node is an NR base station. In the NE-DC, a master node is an NR base station connected to a 5G core network, and a secondary node is an LTE base station. In the NR-DC, a master node is an NR base station connected to a 5G core network, and a secondary node is an LTE base station. In the NR-DC, a master node is an NR base station connected to a 5G core network, and a secondary node is an NR base station.

It should be noted that, both the master node and the secondary node in the MR-DC have RRC entities, both can generate an RRC message (that is, a control message, for example, may be a measurement message), and both can send the RRC message to the UE. The secondary node may directly send, to the UE, the RRC message generated by the secondary node (in this case, an RRC message sent by the UE to the secondary node is also directly sent to the secondary node, where for example, the RRC message between the secondary node and the UE is referred to as an SRB 3), or the secondary node may notify the master node of the generated RRC message, and the master node sends the RRC message to the UE (in this case, the UE forwards, through the master node to the secondary node, the RRC message sent to the secondary node, that is, the UE sends the RRC message to the master node, and the master node forwards the message to the secondary node). There is one primary cell in the master node, and there is one primary secondary cell in the secondary node. The primary cell is a cell that is deployed at a main frequency and that is indicated as a primary cell in an initial connection establishment initiation process, a connection reestablishment initiation process, or a handover process of a terminal device. The primary secondary cell is a cell in which a terminal device initiates a random access procedure, or a cell in which a terminal device skips a random access procedure and initiates data transmission in a change process of the secondary node, or a cell of a secondary node in which a terminal device initiates random access in a synchronous reconfiguration process. A serving cell served by the secondary node is referred to as a secondary cell group (secondary cell group, SCG), and a cell served by the master node is referred to as a master cell group (master cell group, MCG). It should be noted that the master node and the secondary node in the MR-DC may be in various forms and structures of the access network device described above. Optionally, the master node and the secondary node may use a same CU but different DUs, or use a same DU but different CUs.

Optionally, two access network devices in the MR-DC may provide different RLC entities and different MAC entities for the terminal device. In a possible implementation, service data in an MR-DC architecture may have different bearer types, and the bearer types may include an MCG bearer (bearer), an SCG bearer (bearer), and a split bearer (split bearer). The MCG bearer is a bearer on which data transmission is performed only through an RLC entity and a MAC entity of the MN. The SCG bearer is a bearer on which data transmission is performed only through an RLC entity and a MAC entity of the SN. The split bearer is a bearer on which data transmission is performed through both the RLC entity and the MAC entity of the MN and the RLC entity and the MAC entity of the SN.

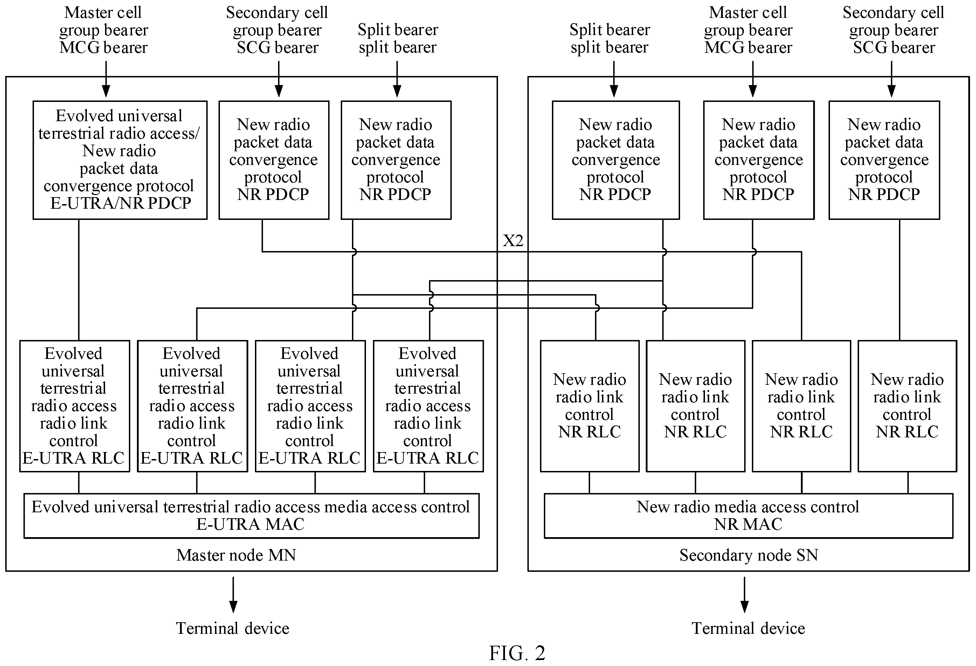

FIG. 2 is a diagram of protocol stacks of an MCG bearer, an SCG bearer, and a split bearer on a network side in EN-DC. As shown in FIG. 2, for a bearer (referred to as an MN terminated bearer) for which a PDCP is terminated on an MN, there are different transmission paths on the network side based on different service data bearer types. When the service data bearer type is an MCG bearer, downlink (downlink, DL) service data directly arrives at the MN from a core network, and is sent to a UE after being sequentially processed by a PDCP, an RLC, and a MAC of the MN. When the service data bearer type is an SCG bearer, DL service data directly arrives at the MN from the core network, and is sent to the UE after being sequentially processed by the PDCP of the MN, and an RLC and a MAC of the SN. When the service data bearer type is a split bearer, DL service data directly arrives at the MN from the core network, and is split at the PDCP of the MN. One part of split data is sent to the UE after being processed by the RLC and the MAC of the SN, and the other part is sent to the UE after being processed by the RLC and the MAC of the MN. The data that is obtained through splitting at the PDCP of the MN, that needs to be transmitted to the SN, and that is processed by the RLC and the MAC of the SN is transmitted through an X2 interface. It should be understood that, in a case of the MN terminated bearer, uplink (uplink, UL) data from the UE is all processed by the PDCP of the MN and then sent to the core network.

However, for a bearer (referred to as an SN terminated bearer) for which a PDCP is terminated on the SN, there are different transmission paths on the network side based on different service data bearer types as well. When the service data bearer type is an SCG bearer, DL service data directly arrives at the SN from the core network, and is sent to the UE after being sequentially processed by a PDCP, the RLC, and the MAC of the SN. When the service data bearer type is an MCG bearer, DL service data directly arrives at the SN from the core network, and is sent to the UE after being sequentially processed by the PDCP of the SN and the RLC and the MAC of the MN. When the service data bearer type is a split bearer, DL service data directly arrives at the SN from the core network, and is split at the PDCP of the SN. One part of split data is sent to the UE after being processed by the RLC and the MAC of the SN, and the other part is sent to the UE after being processed by the RLC and the MAC of the MN. It should be understood that, in a case of the SN terminated bearer, UL data from the UE is all processed by the PDCP of the SN and then sent to the core network.

It should be understood that a master node MN in EN-DC is an LTE base station connected to a 4G core network EPC, and the PDCP may use an evolved universal terrestrial radio access (evolved universal terrestrial radio access, E-UTRA) technology, or may use an NR technology. This is not limited in this application.

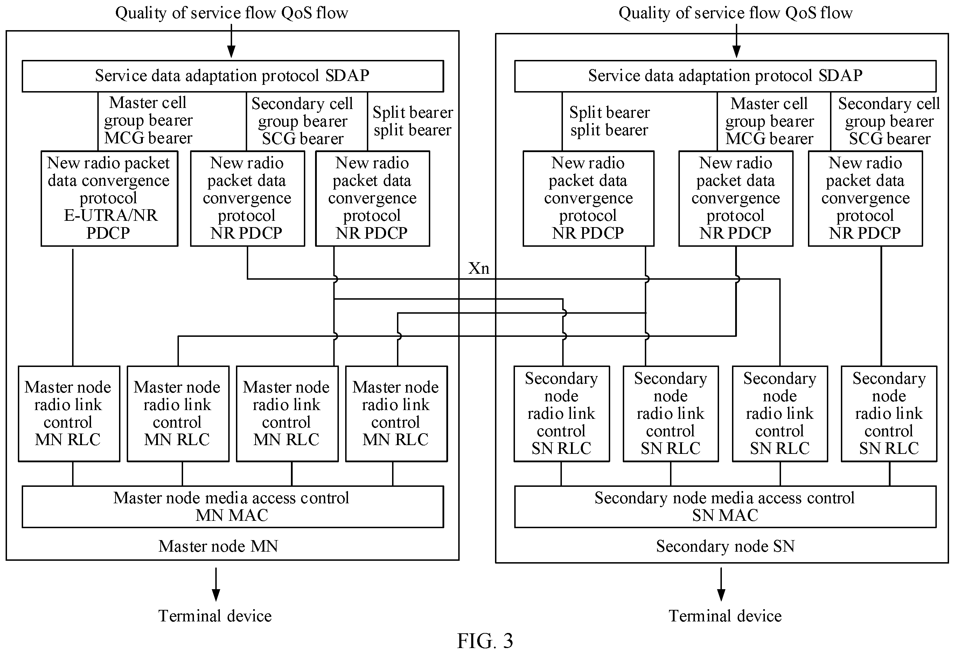

FIG. 3 is a diagram of protocol stacks of an MCG bearer, an SCG, and a split bearer on a network side in NGEN-DC/NE-DC/NR-DC. In the NGEN-DC/NE-DC/NR-DC, a master node is a base station connected to a 5GC. The 5G core network performs data transmission by using a quality of service (Quality of Service, QoS) flow. The QoS flow (QoS flow) is a service flow that has a same service processing feature (for example, scheduling policy or queue management policy). In the 5GC, a minimum granularity of service classification is a QoS flow. A protocol data unit (protocol data unit, PDU for short) session connection exists between a terminal device and a core network to provide a data transmission service. Data packets of corresponding PDU sessions are distinguished based on a QoS flow granularity (that is, one PDU session may include a plurality of QoS flows). To adapt to a QoS architecture in the 5GC, a new radio protocol layer, namely, a service data adaptation protocol (service data adaptation protocol, SDAP for short) layer, is introduced on a base station side. The SDAP layer is used to map each QoS flow from the 5GC to a data radio bearer (data resource bearer, DRB for short) at a radio access layer. To be specific, a data packet corresponding to a QoS flow is transmitted on a corresponding DRB based on a service attribute corresponding to the QoS flow. In other words, a relationship between a PDU session, a QoS flow, and a DRB is as follows: One PDU session may include a plurality of QoS flows, and the plurality of QoS flows in the PDU session may be mapped to a plurality of DRBs (that is, at least one QoS flow may be mapped to one DRB). QoS flows in different PDU sessions are mapped to different DRBs (that is, QoS flows in different PDU sessions cannot be mapped to a same DRB). In addition, different services have different QoS characteristics (a QoS characteristic in the standard is referred to as a 5QI), and one QoS flow may correspond to at least one QoS characteristic.

As shown in FIG. 3, for a bearer for which a PDCP is terminated on an MN, after a QoS flow from the core network is mapped to a DRB through the SDAP, when a bearer type of service data corresponding to the QoS flow is an MCG bearer, the service data is subsequently sent to a UE after being sequentially processed by a PDCP, an RLC, and a MAC of the MN; when the bearer type of the service data is an SCG bearer, data processed by the SDAP is then sent to the UE after being sequentially processed by the PDCP of the MN and an RLC and a MAC of the SN; when the bearer type of the service data is a split bearer, the data processed by the SDAP is split at the PDCP of the MN. One part of split data is sent to the UE after being processed by the RLC and the MAC of the SN, and the other part is sent to the UE after being processed by the RLC and the MAC of the MN. The data that is obtained through splitting at the PDCP of the MN, that needs to be transmitted to the SN, and that is processed by the RLC and the MAC of the SN is transmitted through an Xn interface. It should be understood that, in this case, UL data from the UE is all processed by the SDAP/PDCP of the MN and then sent to the core network.

For a bearer for which a PDCP is terminated on the SN, after a QoS flow from a core network is mapped to a DRB through the SDAP, when a bearer type of service data corresponding to the QoS flow is an SCG bearer, the service data is subsequently sent to the UE after being sequentially processed by a PDCP, the RLC, and the MAC of the SN; when the bearer type of the service data is an MCG bearer, data processed by the SDAP is then sent to the UE after being sequentially processed by the PDCP of the SN and the RLC and the MAC of the SN. When the bearer type of the service data is a split bearer, the data processed by the SDAP is split at the PDCP of the SN. One part of split data is sent to the UE after being processed by the RLC and the MAC of the SN, and the other part is sent to the UE after being processed by the RLC and the MAC of the MN. It should be understood that, in this case, UL data from the UE is all processed by the SDAP/PDCP of the SN and then sent to the core network.

For ease of understanding this application, the following first briefly describes radio side measurement and application layer measurement.

### 1. Radio side measurement

The radio side measurement is an important means for monitoring radio network quality. An operator may collect, through radio side measurement, network signal strength, quality, coverage, and the like that are measured by a terminal device and/or an access network device, and optimize a problem and a fault in a radio network based on a radio side measurement result, to provide better network quality for a user. For example, the radio side measurement may be performed through minimization of drive tests (minimization of drive tests, MDT) measurement, L2 (layer 2) measurement, or other measurement.

The MDT measurement includes logged MDT (logged MDT) and immediate MDT (immediate MDT). The immediate MDT is measurement mainly for a terminal in a radio resource connected (radio resource control, RRC) connected state, and the logged MDT is measurement mainly for a terminal in an idle state. The immediate MDT at least may be used to measure at least one of the following: data volume measurement, throughput rate measurement, packet transmission delay measurement, packet loss rate measurement, processing delay measurement, or other measurement of the terminal. The logged MDT may be used to measure one or more of the following: random access channel (random access channel, RACH) failure measurement, signal strength measurement, connection establishment failure measurement, and radio link failure (radio link failure, RLF) measurement.

The L2 measurement is used by a network side to collect statistics on some network performance, so as to perform functions such as radio link management, radio resource management, and network maintenance. Some L2 measurement is performed for statistics collection for one terminal, for example, a service throughput, service traffic, a processing delay of the terminal, and an air interface delay of the terminal.

Currently, an operator usually performs routine network coverage drive test every month, or perform call quality drive test in specific areas based on user complaints. To implement automatic collection of terminal measurement data and improve network optimization efficiency, the foregoing drive test may be replaced with MDT measurement currently. A basic idea of the technology is that the operator performs measurement via a commercial terminal device of a subscriber and sends a measurement result to partially replace the conventional drive test.

Measurement types of the existing MDT technology may be classified into signal level measurement, quality of service (quality of service, QoS) measurement, accessibility measurement, and the like. The signal level measurement is that the terminal device measures a signal level of a radio signal, and sends a measurement result to the access network device. The quality of service (quality of service, QoS) measurement is usually that the access network device performs QoS measurement, for example, on service traffic, a service throughput, and a service delay, or the terminal device performs measurement on an uplink processing delay and the like, or the access network device and the terminal device perform joint measurement on an air interface delay, that is, measurement of duration from passing through an SDAP layer/PDCP layer of the access network device by a data packet to arrival of the data packet at an SDAP/PDCP layer of the terminal device. The accessibility measurement is that the terminal device logs information about an RRC connection establishment failure, and sends the information to the access network device.

Currently, a basic procedure for MDT-based radio side measurement is as follows: An access network device obtains MDT measurement configuration information from a core network device or a management device. The access network device performs MDT measurement. Alternatively, the access network device sends the MDT measurement configuration information to a terminal device. The terminal device performs measurement based on the configuration information, and sends an MDT measurement result to the access network device. The access network device sends the MDT measurement result to a trace collection entity (trace collection entity, TCE).

There are two MDT measurement modes: signalling based MDT (signalling based MDT) and management based MDT (management based MDT). The signalling based MDT is MDT for a specific UE. After receiving an MDT measurement configuration message from a core network, a base station indicates the specific UE to perform MDT measurement, or the base station directly performs MDT measurement on the UE. Only when the user has agreed to perform MDT, the CN initiates signalling MDT for the UE, and the CN notifies the base station of some MDT configuration information and an IP address of the TCE or an MCE. The MDT configuration information includes: an MDT activation type (for example, immediate MDT only, logged MDT only, or immediate MDT and trace), an MDT area range, an MDT mode, and a configuration parameter of a corresponding mode (for example, a measurement event of immediate MDT, a recording interval and duration of logged MDT), and a signalling based MDT PLMN list. By contrast, the management based MDT is not MDT for a specific UE. After receiving an MDT measurement configuration message from a management device (for example, an operation, administration, and maintenance (operation, administration, and maintenance, OAM) or an element manager (element manager, EM)), the base station selects a UE from UEs served by the base station to perform MDT measurement. When performing UE selection, the base station may also consider whether the UE agrees to perform MDT. In an implementation, the base station selects only a UE that has agreed to perform MDT to perform MDT measurement (for example, the core network notifies the base station whether a UE agrees to perform MDT, for example, the CN notifies the base station of a management based MDT allowed indication (management based MDT allowed indication) of the user, and further, notifies a management based MDT PLMN list).

### 2. Application layer measurement

For some streaming-type services or voice services, for example, a streaming service (streaming service) and a multimedia telephony service for IP multimedia system (multimedia telephony service for IMS, MTSI), only radio side measurement and radio side measurement optimization cannot meet experience requirements of a user using these services. In this case, quality of experience (quality of experience, QoE) measurement may be currently used, which may also be referred to as application layer measurement, to enable an operator to better understand service experience of the user, and better optimize a network, to more accurately improve user experience.

Currently, a basic procedure for application layer measurement based on QoE measurement is as follows: An access network device obtains application layer measurement configuration information from a core network device or a management device, and sends the application layer measurement configuration information to an access stratum of a terminal device. The access stratum of the terminal device sends the application layer measurement configuration information to an upper layer of the access stratum of the terminal device. The upper layer of the access stratum of the terminal device receives the application layer measurement configuration information, performs measurement based on the configuration information, and sends an application layer measurement result to the access stratum of the terminal device. The access stratum of the terminal device sends the application layer measurement result to the access network device. The access network device sends the application layer measurement result to a measurement collection entity (measurement collection entity, MCE) device.

The application layer measurement configuration information (in an example of QoE measurement) may include one or more of the following: a QoE measurement identifier (QoE reference), a service type (service type), a choice area scope of QoE measurement collection (choice area scope of QoE measurement collection, QMC), a tracking area-based (tracking area (TA)-based) range, a tracking area identifier-based (tracking area identifier (TAI)-based) range, a public land mobile network area-based (PLMN area-based) range, a measurement collection entity IP address (measurement collection entity IP address), a container for application layer measurement configuration (container for application layer measurement configuration), a slice support list for QoE measurement collection (slice support list for QMC), MDT alignment information (choice MDT alignment information), an available RAN visible QoE measurement quantity or measurement metric (available RAN visible QoE metrics), and the like. The choice area scope of QoE measurement collection may further be a cell-based (Cell based) range, or may further be a cell identifier list for QoE measurement collection (cell ID list for QMC), or further include a 5G radio access network cell global identifier (NG-RAN CGI). The tracking area-based range may further be a tracking area list for QoE measurement collection (tracking area list for QMC), or may further be a tracking area code (tracking area code, TAC). The tracking area identifier-based range may further be a tracking area identifier list for QoE measurement collection (TAI list for QMC), or may further be a tracking area identifier (TAI). The public land mobile network-based range may further be a public land mobile network list for QoE measurement collection (PLMN list for QMC), or may further be a public land mobile network identity (PLMN identity). The slice support list may further be a slice support QoE measurement collection item (slice support QMC item), or may further be single network slice selection assistance information (single network slice selection assistance information, S-NSSAI). The MDT alignment information may further be signalling-based MDT measurement (s-based MDT), or may further be a 5G radio access network trace identifier (NG-RAN trace ID).

The application layer measurement result may include one or more of the following measurement metrics: a metric of an average throughput (the metric indicates a total quantity of bits received by an application layer of a UE (for example, for a streaming service) within a measurement interval), a metric of an initial playback delay (the metric indicates an initial playback delay before streaming starts to be presented, for example, the initial playback delay may be specifically defined as duration from a moment at which a first segment of the medium is obtained to a moment at which the streaming is extracted from a buffer of a client), a metric of a buffer level (the metric indicates duration in which media data can be further played starting from a current playback moment), a metric of a playback delay (the metric indicates a playback delay in starting of the streaming, for example, the metric may be specifically defined as a delay from reception of a trigger of playback/rollback/start by a dynamic adaptive streaming over hypertext transfer protocol (dynamic adaptive streaming over HTTP, DASH) player to playing of the media), a metric of deterioration duration (the metric indicates an interval between Nepal time (nepal time, NPT) corresponding to a previous high-quality frame before deterioration and Nepal time corresponding to a subsequent 1^{st} high-quality frame), a metric of a number of successively lost packets (the metric indicates a quantity of successively lost real-time transport protocol (real-time transport protocol, RTP) packets), a metric of jitter duration (jitter indicates that a difference between an actual playback moment and an expected playback moment of a frame exceeds a threshold, where an expected playback moment of a frame is a playback moment of a previous played frame plus (a difference between Nepal time of a current frame and Nepal time of the previous played frame)), a metric of synchronization loss duration (synchronization loss indicates that an absolute time difference between a value A and a value B exceeds a specific threshold, where the value A herein is a difference between a playback moment of a previous played frame of a video stream and a playback moment of a previous played frame of a speech/audio stream; and the value B herein is a difference between an expected playback moment of the previous played frame of the video stream and an expected playback moment of the previous played frame of the speech/audio stream), a metric of a round-trip time (the metric indicates RTP-level round-trip time, plus an additional two-way delay (RTP level -> speaker -> microphone -> RTP level) due to buffering and other processing in a client), a metric of an average bitrate (the metric indicates a bitrate used for coding active media information during a measurement period), a metric of a comparable quality viewport switching latency (comparable quality viewport switching latency) (the metric reports a delay and a quality-related factor when quality deteriorates due to viewport movement, where the quality-related factor includes a quality ranking value (quality ranking value) and a resolution), or a metric of freezing (the metric indicates whether freezing occurs in a video stream playback process or duration of freezing).

Optionally, a value of the measurement metric may be a specific value, or may be a range (for example, one of good, medium, and poor). For definitions of these metrics, refer to definitions in a 3GPP protocol. The measurement metric may alternatively be a comprehensive measurement metric of a plurality of metrics such as the metric of the average throughput, the metric of the initial playback delay, the metric of the buffer level, the metric of the playback delay, the metric of the deterioration duration, the metric of the number of successively lost packets, the metric of the jitter duration, the metric of the synchronization loss duration, the metric of the round-trip delay, the metric of the average bitrate, the metric of the comparable quality viewport switching latency, or the metric of freezing. For example, according to a specific rule or formula, the plurality of metrics are combined to obtain a comprehensive metric. A value of the comprehensive measurement metric may be a specific value, or may be a range (for example, one of good, medium, and poor).

For a same UE, if application layer measurement is performed for the first service in a first time period, and a radio side measurement result of a network that bears the first service in the first time period can be learned as well, when a metric in the application layer measurement result corresponding to the first service of the UE is not ideal, it can be quickly located whether non-idealness of the metric is related to the radio side measurement result of the first service in the first time period. This helps maintenance and management of the first service and timely optimization for the UE. In other words, if an application layer measurement result of a UE in a time period is associated with a radio side measurement result that is in the time period, that is of measurement between the UE and the access network device, and that is of a borne service corresponding to the application layer measurement result, it is helpful to optimize quality of service of the first service and network quality of the UE.

However, association between the application layer measurement result and the radio side measurement result depends on an application layer measurement process. To be specific, when reporting the application layer measurement result to the MCE, the access network device needs to report a radio side measurement result identifier corresponding to the current application layer measurement result. However, the radio side measurement result identifier is maintained by an access network device that bears a service corresponding to the application layer measurement result. In other words, the access network device that reports the application layer measurement result to the MCE needs to know the specific access network device that bears the service corresponding to the application layer measurement result. In this way, the radio side measurement result identifier corresponding to the current application layer measurement result can be obtained, and the application layer measurement result and the radio side measurement result can be further associated based on the MCE/TCE.

Currently, if the radio side measurement result is to be associated with the application layer measurement result, the access network device that reports the application layer measurement result to the MCE needs to obtain, based on service information included in a measurement result that is reported by the terminal device and that is visible to the access network device, information about an access network device that bears a service corresponding to the application layer measurement result. However, the access network device that reports the application layer measurement result to the MCE may not support indicating the terminal device to report the measurement result visible to the access network device, and/or the access network device does not intend to report, for the terminal device, application layer measurement visible to the access network device, and/or the terminal device may not support reporting of the measurement result visible to the access network device. This brings inconvenience to association between the application layer measurement result and the radio side measurement result, and is not conducive to optimization on a network side.

In view of this, this application provides an application layer measurement method. Indication information is sent to a terminal device, to indicate the terminal device to report an identifier of a service corresponding to application layer measurement. This decouples two functions (obtaining a measurement result visible to an access network device and associating a radio side measurement result with an application layer measurement result) from each other. Therefore, association between the radio side measurement result and the application layer measurement result no longer depends on a capability of the access network device and/or the terminal device, thereby facilitating information collection and network optimization on a network side, and facilitating the network side in providing a refined service for a user based on an association result.

To make objectives and technical solutions of this application clearer and more intuitive, the following describes in detail a network optimization method and a communication apparatus that are provided in embodiments of this application with reference to the accompanying drawings and embodiments. It should be understood that specific embodiments described herein are merely used to explain this application but are not intended to limit this application.

Before the method and the apparatus provided in embodiments of this application are described, the following descriptions are first provided.

First, in embodiments shown below, terms and English abbreviations, for example, reference data or differential data, are examples provided for ease of description, and shall not constitute any limitation on this application. This application does not exclude a possibility of defining, in an existing or a future protocol, another term that can implement a same or similar function.

Second, the first, the second, and various numerical numbers in embodiments shown below are merely distinguished for ease of description, and are not intended to limit the scope of embodiments of this application.

Third, "at least one" means one or more, and "a plurality of" means two or more. "And/or" describes an association relationship between associated objects, and indicates that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including a single item (piece) or any combination of a plurality of items (pieces). For example, at least one item (piece) of a, b, and c may indicate a, b, c, a and b, a and c, b and c, or a, b, and c, where a, b, and c may be single or plural.

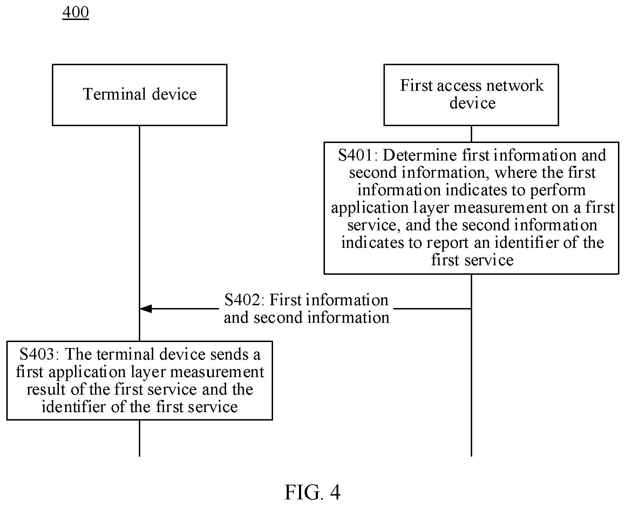

FIG. 4 is a schematic flowchart of a communication method 400 according to an embodiment of this application. The method 400 may be applied to the system architecture 100 shown in FIG. 1, and may be further applied to another architecture. The first access network device in this embodiment of this application may be equivalent to the access network device 103 or the access network device 104 in FIG. 1. This is not limited in this embodiment of this application. As shown in FIG. 4, the method 400 includes the following steps.

S401: The first access network device determines first information and second information, where the first information indicates to perform application layer measurement on a first service, and the second information indicates to report an identifier of the first service.

S402: The first access network device sends the first information and the second information to a terminal device. Correspondingly, the terminal device receives the first information and the second information.

S403: The terminal device sends a first application layer measurement result of the first service and the identifier of the first service.

It should be understood that the first information includes at least one of a service type, an application layer measurement configuration, an application layer measurement identifier, and the like of the first service. The first information may be information determined by the first access network device, or may be all or a part of measurement configuration information sent by a core network CN device or an OAM device to the first access network device. This is not limited in this application. The terminal device performs application layer measurement on the first service based on the application layer measurement configuration in the first information, to obtain the first application layer measurement result (the first application layer measurement result may include at least one measurement result of the measurement metrics described above). The first service is one or more services corresponding to the service type indicated in the first information, and the first service may be some streaming-type services or voice services, for example, a streaming service (streaming service) and a multimedia telephony service for internet protocol multimedia subsystem service (multimedia telephony service for IP multimedia subsystem service, MTSI). It should be noted that the first information does not specify a service that the first service is, but only specifies a service type corresponding to the first service.

Optionally, when the first access network device determines that the application layer measurement of the first service needs to be associated with radio side measurement or determines that the application layer measurement result of the first service needs to be associated with the radio side measurement result, the first access network device determines that the second information needs to be sent to the terminal device.

Optionally, the application layer measurement configuration in the first information may be sent to the terminal device in a form of a container (container) (for example, in a form of a byte string) or in a form of a non-container (for example, in a form of an information element). For the application layer measurement configuration sent in the form of the container, an access stratum of the terminal device cannot perceive information in the container, or information in the container is invisible to an access stratum of the terminal device. For the application layer measurement configuration sent in the form of the non-container, the application layer measurement configuration is in a form that can be sensed by or visible to the access stratum of the terminal device. A form of the application layer measurement configuration is not specifically limited in this application.

It should be further understood that the second information may be explicit indication information. For example, the second information sent by the first access network device to the terminal device explicitly requires the terminal device to report service information corresponding to current application layer measurement, or report service information used to associate an application layer measurement result with a radio side measurement result, where the service information includes the identifier of the first service. Alternatively, the second information may be implicit indication information. For example, the second information indicates the terminal device to report application layer measurement startup information, and a protocol specifies that when the terminal device reports the application layer measurement startup information, the terminal device also needs to report an identifier of a first service corresponding to current application layer measurement. It should be noted that "the second information indicates to report the identifier of the first service" described in this application represents a fundamental purpose of sending the information by the first access network device to the terminal device, and does not constitute a specific limitation on a form of implementing the purpose.

Optionally, the first access network device may send the first information and the second information through one RRC message, or may separately send the first information and the second information through two RRC messages. The terminal device may also send the first application layer measurement result and the identifier of the first service through one RRC message, or may separately send the first application layer measurement result and the identifier of the first service through two RRC messages. This is not limited in this application.

Optionally, the application layer measurement may be QoE measurement, and the radio side measurement may be MDT measurement or L2 measurement. This is not specifically limited in this application.

In embodiments of this application, the first access network device obtains, by sending the second information to the terminal device, the identifier of the first service used to associate the application layer measurement result with the radio side measurement result. This is not limited by whether an access network device can indicate the terminal device to report an application layer measurement result visible to the access network device, and is not limited by whether the terminal device can support reporting of the application layer measurement result visible to the access network device. In other words, the identifier can be obtained without the need of a case in which the terminal device includes the identifier of the first service in the application layer measurement result visible to the access network device. This helps remove a binding relationship between "the terminal device reports the application layer measurement result visible to the access network device" and "associating the application layer measurement result with the radio side measurement result". When the application layer measurement result needs to be associated with the radio side measurement result, a capability of the access network device and/or the terminal device does not need to be depended on. This helps associate the application layer measurement result with the radio side measurement result, and facilitates measurement information collection and network quality maintenance on a network side.

If the terminal device establishes connections to both the first access network device and a second access network device, that is, the terminal device is in an MR-DC scenario, there are two possible implementations in which the terminal device sends the first application layer measurement result of the first service and the identifier of the first service in S403: (1) The terminal device sends the first application layer measurement result to the first access network device (or the second access network device), and sends the identifier of the first service to the second access network device (or the first access network device). (2) The terminal device sends the first application layer measurement result and the identifier of the first service to the first access network device (or the second access network device). A sequence in which the terminal device reports the first application layer measurement result and the identifier of the first service is not limited in this application.

It should be noted that the first access network device in S401 and S402 may be different from the first access network device that receives the first application layer measurement result and/or the identifier of the first service in S403. For example, due to mobility of the terminal device, the terminal device is handed over from the first access network device involved in S401 and S402 to the first access network device involved in S403.

Optionally, a node that receives the application layer measurement result may be specified by an access network device (the first access network device or the second access network device) (for example, the access network device sends indication information to the terminal device, to indicate a specific access network device to which the application layer measurement result is reported), or may be determined by the terminal device. A node that receives the identifier of the first service may be specified by the access network device (the first access network device or the second access network device) (for example, specified through the second information), or may be determined by the terminal device. This is not limited in this application.

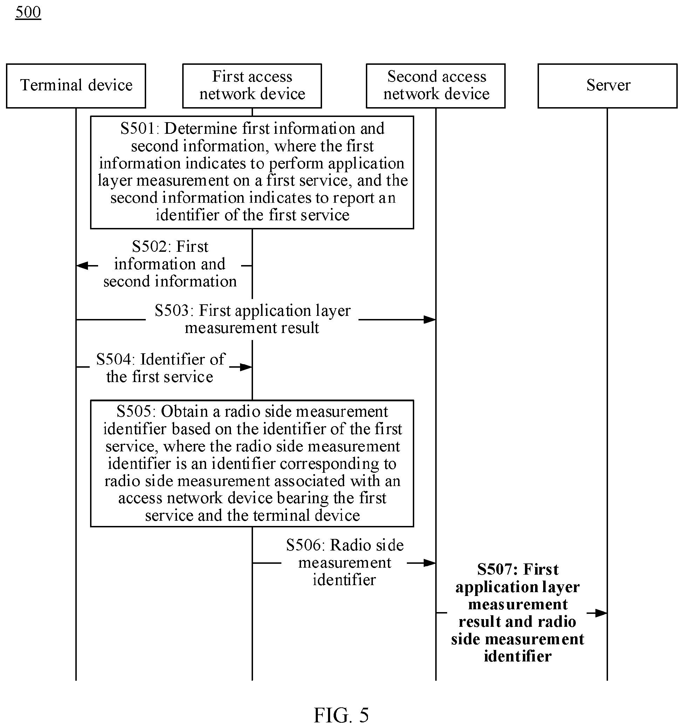

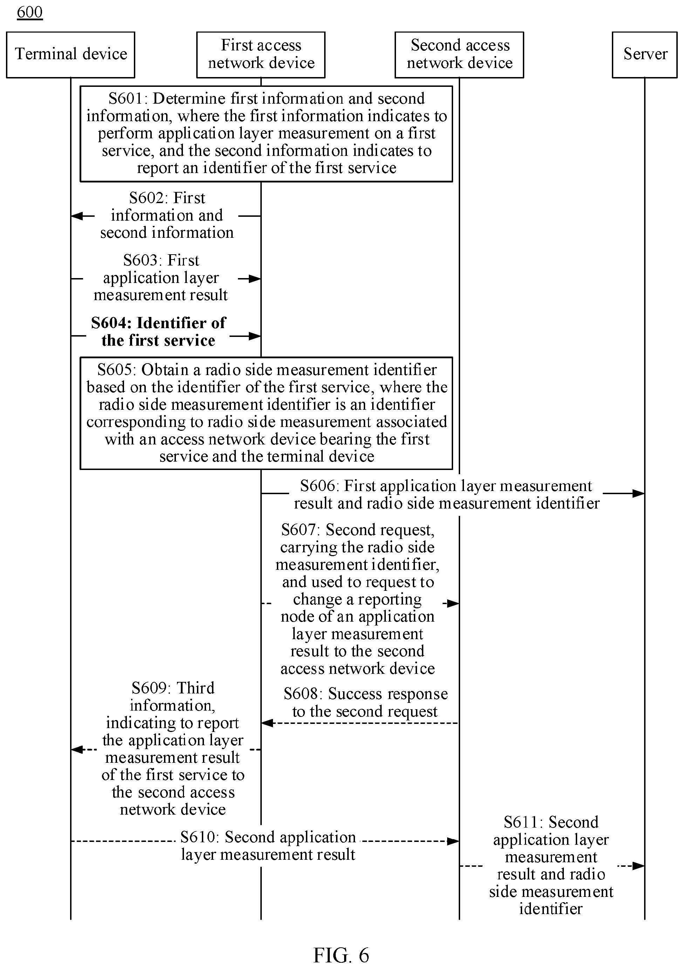

The following separately describes in detail the two implementations of S403 with reference to FIG. 5 and FIG. 6.

FIG. 5 is an execution procedure of a communication method according to this application, which may be shown in FIG. 5. The method 500 may be applied to the system architecture 100 shown in FIG. 1, and may be further applied to another architecture. In this embodiment of this application, a first access network device may be equivalent to the access network device 103 (or the access network device 104) in FIG. 1, and a second access network device may be equivalent to the access network device 104 (or the access network device 103) in FIG. 2. This is not limited in this embodiment of this application. In the method 500 corresponding to FIG. 5, a terminal device sends a first application layer measurement result to the second access network device, and sends an identifier of a first service to the first access network device.

The method 500 includes the following steps.

S501 and S502 are the same as S401 and S402 in the method 400, and details are not described herein again.

S503: The terminal device sends the first application layer measurement result to the second access network device. Correspondingly, the second access network device receives the first application layer measurement result.

S504: The terminal device sends the identifier of the first service to the first access network device. Correspondingly, the first access network device receives the identifier of the first service.

S505: The first access network device obtains a radio side measurement identifier based on the identifier of the first service, where the radio side measurement identifier is an identifier corresponding to radio side measurement associated with an access network device bearing the first service and the terminal device.

S506: The first access network device sends the radio side measurement identifier to the second access network device.

S507: The second access network device sends the first application layer measurement result and the radio side measurement identifier to a server. Correspondingly, the server receives the first application layer measurement result and the radio side measurement identifier.

It should be understood that the terminal device is movable. In other words, the terminal device may move out of a network coverage area of one access network device and enter a network coverage area of another access network device. Therefore, there is a possibility that the access network device that determines and sends the first information and the second information in S401 and S402 is not the same as the access network device that receives the identifier of the first service in S503. In this embodiment of this application, an example in which both the access network devices are the first access network device is merely used for description. In addition, both the first access network device and the second access network device are general terms for two access network devices that establish communication with the terminal device at a moment or in a time period, are not two specific access network devices, and do not constitute a specific limitation on an access network device connected to the terminal device.

It should be understood that an execution sequence of S503 and S504 is not limited in this application.

Optionally, the server may be an MCE and/or a TCE. This is not specifically limited in this application. In some examples, the second access network device sends the first application layer measurement result and the radio side measurement identifier to the MCE, and the TCE receives a radio side measurement result corresponding to the radio side measurement identifier.

In S505, after receiving the identifier of the first service, the first access network device needs to first determine a specific access network device bearing the first service, and then obtain, from the access network device bearing the first service, an identifier corresponding to radio side measurement associated with the device and the terminal device. The following two possible implementations of S505 are provided in embodiments of this application.

In a first possible implementation, a basis for the first access network device to determine the specific access network device bearing the first service is: An RLC entity and a MAC entity of the specific access network device process a data packet corresponding to the identifier of the first service. Correspondingly, there are the following possible cases.

Case 1: If the data packet corresponding to the identifier of the first service is processed only by an RLC entity and a MAC entity of the second access network device, the first service is borne only by the second access network device.

Refer to FIG. 2 or FIG. 3. For example, if the second access network device is an MN, a bearer type of the first service in Case 1 may be an MN terminated MCG bearer or an SN terminated MCG bearer; or if the second access network device is an SN, the bearer type of the first service may be an SN terminated SCG bearer or an MN terminated SCG bearer. Regardless of whether the first access network device is the SN or the MN, and regardless of whether a PDCP of the first access network device processes the data packet corresponding to the identifier of the first service, when the first access network device determines that an RLC entity and a MAC entity of the first access network device do not process the data packet corresponding to the identifier of the first service, the first access network device may determine that the first service is borne only by the second access network device.

Case 2: If the data packet corresponding to the identifier of the first service is processed only by the RLC entity and the MAC entity of the first access network device, the first service is borne only by the first access network device.

For example, if the second access network device is an MN, a bearer type of the first service in Case 2 may be an SN terminated SCG bearer or an MN terminated SCG bearer. If the second access network device is an SN, the bearer type of the first service may be an MN terminated MCG bearer or an SN terminated MCG bearer.

If the data packet corresponding to the identifier of the first service is not processed by the PDCP entity of the first access network device (that is, a PDCP is terminated on the second access network device), after determining that the RLC entity and the MAC entity of the first access network device process the data packet corresponding to the identifier of the first service, the first access network device needs to send a first query request to the second access network device. The first query request is used to query whether the RLC entity and the MAC entity of the second access network device process the data packet corresponding to the identifier of the first service, and the first query request is to carry the identifier of the first service. When the first access network device receives a response to the first query request from the second access network device, and determines, based on the response, that the RLC entity and the MAC entity of the second access network device do not process the data packet corresponding to the identifier of the first service, the first access network device can determine that the first service is borne only by the first access network device.

If the data packet corresponding to the identifier of the first service is processed by the PDCP entity of the first access network device (that is, the PDCP is terminated on the first access network device), because the data packet is split or combined at the PDCP of the first access network device in this case, the PDCP entity of the first access network device stores a transmission path of the data packet or has learned of the transmission path of the data packet. Therefore, the first access network device may determine, based on the PDCP entity, whether the data packet that corresponds to the identifier of the first service and that flows out of (or into) the PDCP is processed only by the RLC entity and the MAC entity of the first access network device. When the first access network device determines, based on the PDCP entity, that the data packet corresponding to the identifier of the first service is processed only by the RLC entity and the MAC entity of the first access network device, the first service is borne only by the first access network device.

Case 3: If the data packet corresponding to the identifier of the first service is processed by the RLC entity of the second access network device, the MAC entity of the second access network device, the RLC entity of the first access network device, and the MAC entity of the first access network device, the first service is jointly borne by the second access network device and the first access network device.

Refer to FIG. 2 or FIG. 3. It can be learned that, when the data packet corresponding to the identifier of the first service is processed by the RLC entity of the second access network device, the MAC entity of the second access network device, the RLC entity of the first access network device, and the MAC entity of the first access network device, the bearer type of the first service includes an MN terminated split bearer or an SN terminated split bearer.

If the data packet corresponding to the identifier of the first service is not processed by the PDCP entity of the first access network device, but the first access network device determines that the RLC entity and the MAC entity of the first access network device process the data packet corresponding to the identifier of the first service, when the foregoing response to the first query request indicates that the RLC entity and the MAC entity of the second access network device also process the data packet corresponding to the identifier of the first service, the first access network device determines that the first service is jointly borne by the second access network device and the first access network device.

If the data packet corresponding to the identifier of the first service is processed by the PDCP entity of the first access network device, the first access network device may determine, via the PDCP entity, the transmission path of the data packet corresponding to the identifier of the first service. When the transmission path of the data packet includes the RLC entity of the second access network device, the MAC entity of the second access network device, the RLC entity of the first access network device, and the MAC entity of the first access network device, the first access network device determines that the first service is jointly borne by the second access network device and the first access network device.

It should be understood that the radio side measurement is radio network quality monitoring performed on the access network device and the terminal device. The access network device bearing the first service configures the radio side measurement for the terminal device (which may be understood as measuring radio network quality between the access network device and the terminal device), to learn of radio network quality of the access network device bearing the first service. This helps perform problem analysis and quality maintenance on quality of service of the first service based on the application layer measurement result of the first service.

It should be further understood that a result of the application layer measurement performed on the first service needs to be associated with the radio side measurement performed on the terminal device by the access network device bearing the first service. In addition, because the radio side measurement identifier is included in radio side measurement configuration information sent by a core network or a management device to the access network device, and the access network device maintains the identifier, the identifier is to be obtained from the access network device bearing the first service.

In a possible implementation, when the first access network device determines that the second access network device bears the first service (corresponding to Case 1 and Case 3), the first access network device sends a first request to the second access network device, where the first request is used to request a second identifier corresponding to radio side measurement associated with the second access network device and the terminal device; and receives the second identifier from the second access network device, or obtains indication information of the second access network device, where the indication information indicates that radio side measurement cannot be configured for the terminal device or the second identifier corresponding to the radio side measurement associated with the second access network device and the terminal device cannot be obtained.

In a possible implementation, alternatively, when the first access network device determines that the second access network device may bear the first service (corresponding to Case 1 and Case 3), the first access network device sends a first request to the second access network device, where the first request is used to request a second identifier corresponding to radio side measurement associated with the second access network device and the terminal device; and receives the second identifier from the second access network device, or obtains indication information of the second access network device, where the indication information indicates that radio side measurement cannot be configured for the terminal device or the second identifier corresponding to the radio side measurement associated with the second access network device and the terminal device cannot be obtained. In this implementation, the first access network device does not need to send the first query request to the second access network device. In a case corresponding to Case 1, the radio side measurement identifier obtained by the first access network device includes the second identifier. In a case corresponding to Case 2, the radio side measurement identifier obtained by the first access network device includes a first identifier. The first identifier corresponds to radio side measurement associated with the first access network device and the terminal device, and is maintained by the first access network device. In a case corresponding to Case 3, the radio side measurement identifier obtained by the first access network device includes the first identifier and the second identifier.

For example, the first identifier may be an MDT measurement identifier configured by the core network, an OAM, or an EM for the first access network device, for example, may be a trace identifier (trace ID), and the second identifier may be an MDT measurement identifier configured by the core network, the OAM, or the EM for the second access network device.

Optionally, the first identifier and the second identifier may be a same identifier, or may be different identifiers, depending on whether a same identifier is used for radio side measurement configurations configured by the core network or the management device for the MN and the SN. This is not limited in this application. When the first identifier and the second identifier are the same identifier, in an example, the radio side measurement identifier may further include an identifier of an access network device corresponding to each of the first identifier and the second identifier.

In a second possible implementation, a basis for the first access network device to determine a specific access network device bearing the first service is: A PDCP entity and/or an RLC/MAC entity in the specific access network device process/processes the data packet corresponding to the identifier of the first service. Correspondingly, there are the following possible implementations.

Implementation 1: If the data packet corresponding to the identifier of the first service is processed only by the PDCP entity of the second access network device, the RLC entity of the second access network device, and the MAC entity of the second access network device, the first service is borne only by the second access network device.

Refer to FIG. 2 or FIG. 3. In this case, if the second access network device is an MN, the bearer type of the first service is an MN terminated MCG bearer; or if the second access network device is an SN, the bearer type of the first service is an SN terminated SCG bearer. When determining that none of the PDCP entity, the RLC entity, and the MAC entity of the first access network device processes the data packet corresponding to the identifier of the first service, the first access network device may determine that the first service is borne only by the second access network device.

Implementation 2: If the data packet corresponding to the identifier of the first service is processed only by the PDCP entity of the first access network device, the RLC entity of the first access network device, and the MAC entity of the first access network device, the first service is borne only by the first access network device.

In this case, if the first access network device is an MN, the bearer type of the first service is an MN terminated MCG bearer; or if the first access network device is an SN, the bearer type of the first service is an SN terminated SCG bearer. When the first access network device determines, based on the identifier of the first service, that the PDCP entity of the first access network device processes the data packet corresponding to the identifier of the first service, and further determines, based on the PDCP, that only the RLC entity and the MAC entity of the first access network device process the data packet corresponding to the identifier of the first service, the first access network device may determine that the first service is borne only by the first access network device.

Implementation 3: If the data packet corresponding to the identifier of the first service is processed by the RLC entity of the second access network device, the MAC entity of the second access network device, the RLC entity of the first access network device, and the MAC entity of the first access network device, or if the data packet corresponding to the identifier of the first service is processed by the PDCP entity of the second access network device, the RLC entity of the first access network device, and the MAC entity of the first access network device, or if the data packet corresponding to the identifier of the first service is processed by the PDCP entity of the first access network device, the RLC entity of the second access network device, and the MAC entity of the second access network device, the first service is jointly borne by the second access network device and the first access network device.

Refer to FIG. 2 or FIG. 3. In this case, if the second access network device is an MN, the bearer type of the first service may be an MN terminated split bearer or an MN terminated SCG bearer; or if the second access network device is an SN, the bearer type of the first service may be an SN terminated split bearer or an SN terminated MCG bearer. When the first access network device determines that the data packet corresponding to the identifier of the first service is not processed by the PDCP entity of the first access network device, but the first access network device determines that the RLC entity and the MAC entity of the first access network device process the data packet corresponding to the identifier of the first service, or when the data packet corresponding to the identifier of the first service is processed by the PDCP entity of the first access network device, but the bearer type of the first service is not the MN terminated MCG bearer or the SN terminated SCG bearer, the first access network device may determine that the first service is jointly borne by the second access network device and the first access network device.

It should be understood that, after the first access network device determines the access network device bearing the first service, a manner of obtaining the radio side measurement identifier is the same as that in the first possible implementation. Details are not described herein again.

In a possible implementation, the first access network device sends the radio side measurement identifier to the second access network device, and the second access network device that receives the first application layer measurement result from the terminal device sends the first application layer measurement result and the radio side measurement identifier to the server.

Optionally, the server may be an MCE and/or a TCE. This is not limited in this application. The second access network device sends the first application layer measurement result and the radio side measurement identifier to the server, that is, indicates the server to associate the first application layer measurement result with a radio side measurement result corresponding to the radio side measurement identifier.

It should be understood that the radio side measurement result corresponding to the radio side measurement identifier includes a radio side measurement result corresponding to the first access network device, and/or a radio side measurement result corresponding to the second access network device. Therefore, there are three cases in which the first application layer measurement result is associated with the radio side measurement result: (1) The first application layer measurement result needs to be associated with the radio side measurement result corresponding to the first access network device. (2) The first application layer measurement result needs to be associated with the radio side measurement result corresponding to the second access network device. (3) The first application layer measurement result needs to be associated with the radio side measurement result corresponding to the first access network device and the radio side measurement result corresponding to the second access network device. One of the first access network device and the second access network device is an MN, and the other is an SN. A specific access network device of the first access network device and the second access network device is an MN/SN is not specifically limited in this application.

It should be further understood that in a process of performing step S505, if the core network, the management device, or the element manager does not send the radio side measurement configuration information to the first access network device (or the second access network device), the first access network device cannot obtain the first identifier (or the second identifier). In this case, in a possible implementation, content that is sent by the second access network device to the server and that corresponds to step S507 may be the first application layer measurement result and indication information indicating that radio side measurement by an access network device on the terminal device cannot be obtained. For example, the content sent by the second access network device to the server may be the first application layer measurement result, the first identifier, and an identifier of the second access network device, indicating that the second access network device cannot perform radio side measurement on the terminal device. In this way, when obtaining the first application layer measurement result, the server may learn that the first application layer measurement result cannot be associated with all radio side measurement results. This can avoid analyzing the application layer measurement result by using this group of data, thereby helping improve accuracy of a subsequent analysis result.

In a possible implementation, when obtaining the first identifier (or the second identifier) from the first access network device (or the second access network device), at the same time or within a preset time period, the first access network device may indicate the first access network device (or the second access network device) to start radio side measurement for the terminal device, to ensure time synchronization between the application layer measurement result and the radio side measurement result, thereby helping improve reliability of an analysis result made based on the application layer measurement result and the radio side measurement result.

In an optional embodiment, the identifier of the first service includes a protocol data unit PDU session identifier, or a PDU session identifier and a quality of service QoS flow identifier.

It should be understood that there is a protocol data unit (protocol data unit, PDU for short) session connection between the terminal device and the core network to provide a data transmission service. The PDU session identifier may uniquely identify one PDU session. When only a QoS flow of the first service exists in one PDU session, the access network device bearing the first service may be determined through the PDU session identifier corresponding to the first service.

Further, when there are QoS flows of a plurality of services in one PDU session, a data flow of the first service may be uniquely determined through the PDU session identifier and the QoS flow identifier that are of the first service. This helps accurately determine the access network device bearing the first service.

In an implementation, after the first access network device receives the identifier of the first service, the first access network device sends the identifier of the first service to the second access network device. The second access network device obtains a radio side measurement identifier based on the identifier of the first service, where the radio side measurement identifier is an identifier corresponding to radio side measurement associated with the access network device bearing the first service and the terminal device. In this case, the first access network device does not need to perform step S505 and step S506. The second access network device first determines, based on the identifier of the first service, a specific access network device bearing the first service, and then obtains, from the access network device bearing the first service, an identifier corresponding to radio side measurement associated with the device and the terminal device. For a specific determining method, refer to descriptions similar to the first possible implementation and the second possible implementation in S505, provided that the first access network device described in the first possible implementation and the second possible implementation in S505 is replaced with the second access network device, and the second access network device described in the first possible implementation and the second possible implementation in S505 is replaced with the first access network device. Details are not described herein again. If the core network, the management device, or the element manager does not send the radio side measurement configuration information to the first access network device (or the second access network device), the second access network device cannot obtain the first identifier (or the second identifier). In this case, in a possible implementation, content that is sent by the second access network device to the server and that corresponds to step S507 may be the first application layer measurement result and indication information indicating that radio side measurement by an access network device on the terminal device cannot be obtained. For example, the content sent by the second access network device to the server may be the first application layer measurement result, the first identifier, and an identifier of the second access network device, indicating that the second access network device cannot perform radio side measurement on the terminal device. In this way, when obtaining the first application layer measurement result, the server may learn that the first application layer measurement result cannot be associated with all radio side measurement results. This can avoid analyzing the application layer measurement result by using this group of data, thereby helping improve accuracy of a subsequent analysis result.

In an implementation, after the first access network device receives the identifier of the first service, a PDCP termination device of a radio bearer corresponding to the first service obtains the radio side measurement identifier based on the identifier of the first service. In other words, if the PDCP of the radio bearer corresponding to the first service is terminated on the first access network device, the first access network device obtains the radio side measurement identifier based on the identifier of the first service. If the PDCP of the radio bearer corresponding to the first service is terminated on the second access network device, the second access network device obtains the radio side measurement identifier based on the identifier of the first service. In this case, the first access network device sends the identifier of the first service to the second access network device.

FIG. 6 is a schematic flowchart of a communication method according to an embodiment of this application. The method 600 may be applied to the system architecture 100 shown in FIG. 1, and may be further applied to another architecture. In this embodiment of this application, the first access network device may be equivalent to the access network device 103 (or the access network device 104) in FIG. 1, and the second access network device may be equivalent to the access network device 104 (or the access network device 103) in FIG. 2. This is not limited in this embodiment of this application. In the method 600 corresponding to FIG. 6, the terminal device sends the first application layer measurement result and the identifier of the first service to the first access network device.

The method 600 includes the following steps.

S601 and S602 in the method 600 are the same as S401 and S402 in the method 400, and details are not described herein again.

S603: The terminal device sends a first application layer measurement result to the first access network device. Correspondingly, the first access network device receives the first application layer measurement result.

S604: The terminal device sends the identifier of the first service to the first access network device. Correspondingly, the first access network device receives the identifier of the first service.

S605: The first access network device obtains a radio side measurement identifier based on the identifier of the first service, where the radio side measurement identifier is an identifier corresponding to radio side measurement associated with an access network device bearing the first service and the terminal device.

S606: The first access network device sends the first application layer measurement result and the radio side measurement identifier to a server. Correspondingly, the server receives the first application layer measurement result and the radio side measurement identifier.

It should be understood that a difference between the two implementations corresponding to S403 lies only in that access network devices that receive the identifier of the first service are different, and manners in which the access network devices "obtain the radio side measurement identifier based on the identifier of the first service" are the same (that is, S605 may be performed by using the method corresponding to S505). Details are not described herein again.

In a possible implementation, the terminal device may periodically perform measurement based on the application layer measurement configuration included in the first information, obtain an application layer measurement result, and periodically send the result.

In an optional embodiment, the method 600 further includes the following steps.

S607: The first access network device sends a second request to the second access network device, where the second request is used to request to change a reporting node of an application layer measurement result to the second access network device, and the second request carries the radio side measurement identifier. Correspondingly, the second access network device receives the second request.

S608: The second access network device sends a success response to the second request to the first access network device. Correspondingly, the first access network device receives the response.

S609: The first access network device sends third information to the terminal device, where the third information indicates to report the application layer measurement result of the first service to the second access network device. Correspondingly, the terminal device receives the third information.

S610: The terminal device sends the second application layer measurement result to the second access network device. Correspondingly, the second access network device receives the second application layer measurement result.

S611: The second access network device sends the second application layer measurement result and the radio side measurement identifier to the server. Correspondingly, the server receives the second application layer measurement result and the radio side measurement identifier.

Optionally, the second request in S607 may be initiated by the first access network device, or may be initiated by the second access network device.

Optionally, the radio side measurement identifier may be carried in the second request, or may be sent through a separate message after S608. This is not limited in this application.

Optionally, the second request may further carry an application layer measurement identifier (for example, may be a QoE reference), indicating application layer measurement corresponding to the radio side measurement identifier.

In embodiments of this application, when the reporting node of the application layer measurement result changes and the changed node does not store the radio side measurement identifier, in a process in which the first access network device and the second access network device exchange a change request or after the change succeeds, an access network device that obtains a radio side measurement identifier in a previous reporting process sends the identifier to another access network device that forms dual connectivity with the terminal device, to avoid a case in which the two access network devices repeatedly perform a procedure of obtaining the radio side measurement identifier, thereby reducing computational power of the access network device, and improving efficiency of associating the application layer measurement result with the radio side measurement result.

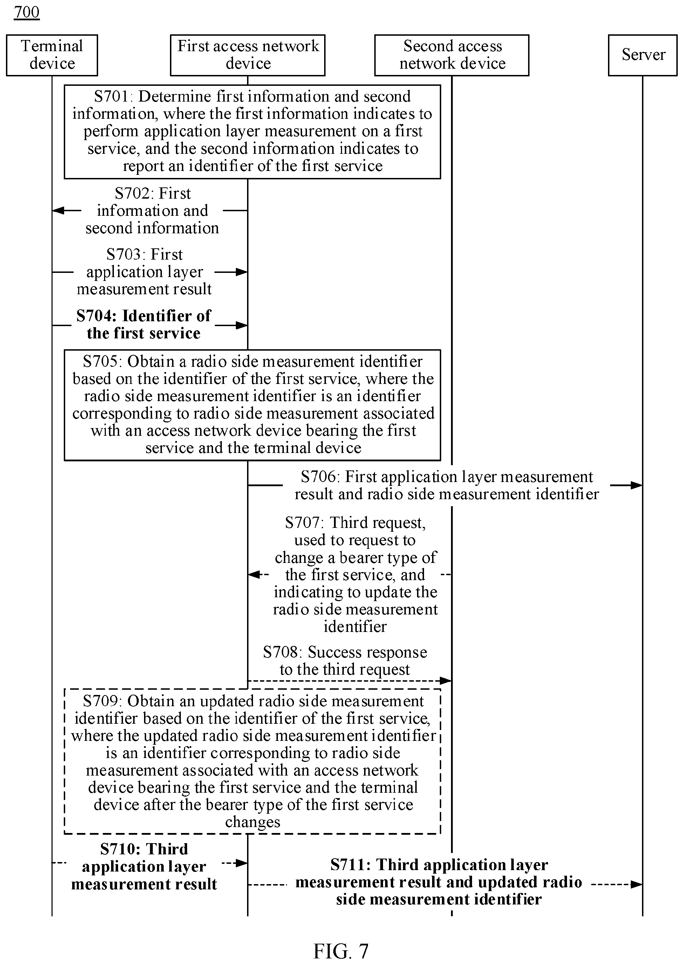

FIG. 7 is a schematic flowchart of a communication method according to an embodiment of this application. The method 700 may be applied to the system architecture 100 shown in FIG. 1, and may be further applied to another architecture. In this embodiment of this application, the first access network device may be equivalent to the access network device 103 (or the access network device 104) in FIG. 1, and the second access network device may be equivalent to the access network device 104 (or the access network device 103) in FIG. 2. This is not limited in this embodiment of this application. In the method 700 corresponding to FIG. 7, the terminal device sends the first application layer measurement result and the identifier of the first service to the first access network device.

The method 700 includes the following steps.

S701 to S706 are the same as S601 to S606 in the method 600, and details are not described herein again.

S707: The second access network device sends a third request to the first access network device, where the third request is used to request to change a bearer type of the first service, and indicates to update the radio side measurement identifier. Correspondingly, the first access network device receives the third request.

S708: The first access network device sends a success response to the third request to the second access network device. Correspondingly, the second access network device receives the response.

S709: The first access network device obtains an updated radio side measurement identifier based on the identifier of the first service, where the updated radio side measurement identifier is an identifier corresponding to radio side measurement associated with an access network device bearing the first service and the terminal device after the bearer type of the first service changes.

S710: The terminal device sends a third application layer measurement result to the first access network device. Correspondingly, the first access network device receives the third application layer measurement result.

S711: The first access network device sends the third application layer measurement result and the updated radio side measurement identifier to the server.

It should be understood that a change in the bearer type of the first service may cause the access network device bearing the first service to change accordingly. Therefore, the radio side measurement identifier may be synchronously indicated to be updated in a bearer type change request.

In a possible implementation, the first access network device may re-determine the updated radio side measurement identifier based on the identifier of the first service in the manner described above (for example, the implementation in S505 may be used).

In another possible implementation, the third request carries a target bearer type of the first service (which may be understood as a bearer type of the first service after a current change is completed), and the first access network device may re-determine the updated radio side measurement identifier based on the target bearer type.

Optionally, the indication information that indicates to update the radio side measurement identifier may be sent by the second access network device to the first access network device after the bearer type is successfully changed. This is not limited in this application.

Optionally, the bearer type change request may alternatively be initiated by the first access network device. In this case, the first access network device may receive, through the success response of the third request, the indication information that indicates to update the radio side measurement identifier, or separately receive the indication information. This is not specifically limited in this application.

In embodiments of this application, in a process in which the bearer type of the first service changes or after the bearer type changes, the access network device that receives the identifier of the first service is indicated to update the radio measurement identifier. This helps carry a radio side measurement identifier corresponding to the application layer measurement result when the application layer measurement result is subsequently reported, thereby improving accuracy of associating the application layer measurement result with the radio side measurement result, and improving reliability of a subsequent analysis result.

Optionally, the steps (S707 to S711) of changing the bearer type of the first service may alternatively be performed after S611 in the method 600 shown in FIG. 6. However, it should be noted that, because a node at which the terminal device reports the application layer measurement result in the method 600 changes, after S709, the following step is to be further performed: S712: The first access network device sends the updated radio side measurement identifier to the second access network device. Correspondingly, the second access network device receives the updated radio side measurement identifier. In addition, in this case, a step corresponding to S710 should be replaced with the following step: The terminal device sends the third application layer measurement result to the second access network device. Correspondingly, the second access network device receives the third application layer measurement result. In addition, a step corresponding to S711 should be replaced with the following step: The second access network device sends the third application layer measurement result and the updated radio side measurement identifier to the server.

Optionally, S607 to S611 in the method 600 corresponding to the embodiment in FIG. 6 may alternatively be performed after S711 corresponding to the method 700 shown in FIG. 7. This is not specifically limited in this application.

Optionally, steps (S707 to S711) of changing the bearer type of the first service may alternatively be performed after S507 corresponding to the method 500 shown in FIG. 5. This is not limited in this application. A fundamental purpose of changing the bearer type of the first service is to indicate, when the bearer type is changed or after the bearer type is successfully changed, an access network device that receives the identifier of the first service to update the radio side measurement identifier. If the node that receives the application layer measurement result is also the access network device, after receiving a latest application layer measurement result, the access network device sends the latest application layer measurement result and the updated radio side measurement identifier to the server. If the node that receives the application layer measurement result is not the access network device that receives the identifier of the first service, the access network device receiving the identifier of the first service sends the updated radio side measurement identifier to the node that receives the application layer measurement result.

It should be understood that the steps in the foregoing embodiments may alternatively be coupled to each other. This is not limited in this application. In addition, sequence numbers of the foregoing processes do not mean an execution sequence. The execution sequence of the processes should be determined based on functions and internal logic of the processes, and should not constitute any limitation on implementation processes of embodiments of this application.

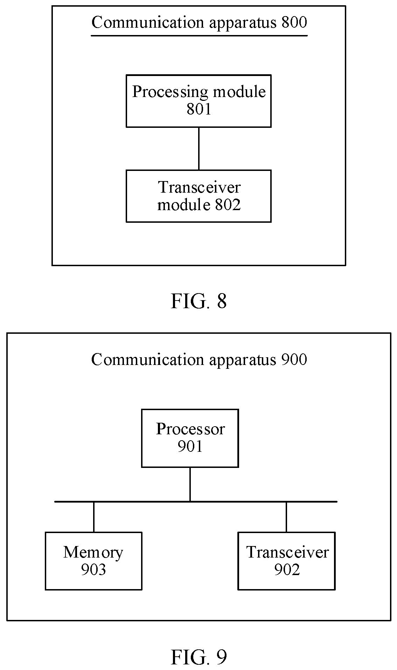

The foregoing describes in detail the communication methods in embodiments of this application with reference to FIG. 4 to FIG. 7. The following describes in detail communication apparatuses in embodiments of this application with reference to FIG. 8 and FIG. 9.

FIG. 8 shows a communication apparatus 800 according to an embodiment of this application. The communication apparatus 800 includes a transceiver module 801 and a processing module 802.

In a first possible implementation, the communication apparatus 800 is configured to perform steps and procedures corresponding to the first access network device.

The processing module 802 is configured to determine first information and second information, where the first information indicates to perform application layer measurement on a first service, and the second information indicates to report an identifier of the first service. The transceiver module 801 is configured to send the first information and the second information to a terminal device.

Optionally, the transceiver module 801 is further configured to: receive a first application layer measurement result of the first service from the terminal device; receive a radio side measurement identifier from a second access network device, where the radio side measurement identifier is an identifier corresponding to radio side measurement associated with an access network device bearing the first service and the terminal device; and send the radio side measurement identifier and the first application layer measurement result to a server.

Optionally, the transceiver module 801 is further configured to receive the identifier of the first service from the terminal device; and the processing module is further configured to send a radio side measurement identifier to a second access network device based on the identifier of the first service, where the radio side measurement identifier is an identifier corresponding to radio side measurement associated with an access network device bearing the first service and the terminal device.

Optionally, the transceiver module 801 is further configured to: receive a first application layer measurement result of the first service and the identifier of the first service from the terminal device; and send a radio side measurement identifier and the first application layer measurement result to a server based on the identifier of the first service, where the radio side measurement identifier is an identifier corresponding to radio side measurement associated with an access network device bearing the first service and the terminal device.

Optionally, if a data packet corresponding to the identifier of the first service is processed only by a radio link control RLC entity and a media access control MAC entity of the first access network device, the radio side measurement identifier is a first identifier corresponding to radio side measurement associated with the first access network device and the terminal device.

Optionally, if a data packet corresponding to the identifier of the first service is processed only by an RLC entity and a MAC entity of the second access network device, the radio side measurement identifier is a second identifier corresponding to radio side measurement associated with the second access network device and the terminal device.

Optionally, if a data packet corresponding to the identifier of the first service is processed by an RLC entity of the first access network device, a MAC entity of the first access network device, an RLC entity of the second access network device, and a MAC entity of the second access network device, the radio side measurement identifier includes a first identifier and a second identifier, the first identifier corresponds to radio side measurement associated with the first access network device and the terminal device, and the second identifier corresponds to radio side measurement associated with the second access network device and the terminal device.

Optionally, the transceiver module 801 is further configured to: send a first request to the second access network device, where the first request is used to request the second identifier; and receive the second identifier from the second access network device.

Optionally, the transceiver module 801 is further configured to send a second request to a second access network device, where the second request is used to request to change a reporting node of an application layer measurement result to the second access network device, and the second request carries the radio side measurement identifier.

Optionally, the identifier of the first service includes a protocol data unit PDU session identifier, or a PDU session identifier and a quality of service QoS flow identifier.

In a second possible implementation, the communication apparatus 800 is configured to perform steps and procedures corresponding to the terminal device.

The transceiver module 801 is configured to receive first information and second information from a first access network device, where the first information indicates to perform application layer measurement on a first service, and the second information indicates to report an identifier of the first service. The transceiver module is further configured to send a first application layer measurement result of the first service and the identifier of the first service.

Optionally, the transceiver module 801 is further configured to: send the first application layer measurement result of the first service and the identifier of the first service to the first access network device, or send the first application layer measurement result of the first service to the first access network device and send the identifier of the first service to a second access network device.

Optionally, the identifier of the first service includes a protocol data unit PDU session identifier, or a PDU session identifier and a quality of service QoS flow identifier.

In a third possible implementation, the communication apparatus 800 is configured to perform steps and procedures corresponding to the second access network device.

The transceiver module 801 is configured to: receive a second request from a first access network device, where the second request is used to request a second identifier, and the second identifier corresponds to radio side measurement associated with the second access network device and a terminal device; and send the second identifier to the first access network device.

Optionally, the transceiver module 801 is further configured to receive a second request from the first access network device, where the second request is used to request to change a reporting node of an application layer measurement result of a first service to the second access network device, and the second request carries the radio side measurement identifier.

It should be understood that, the apparatus 800 herein is presented in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a merged logic circuit, and/or another appropriate component that supports the described function. In an optional example, a person skilled in the art may understand that the apparatus 800 may be specifically the first access network device, the second access network device, or the terminal device in the foregoing embodiments. Alternatively, functions of the terminal device in the foregoing embodiments may be integrated into the apparatus 800. The apparatus 800 may be configured to perform procedures and/or steps corresponding to the first access network device, the second access network device, or the terminal device in the foregoing method embodiments. To avoid repetition, details are not described herein again.

The apparatus 800 has a function for implementing the corresponding steps performed by the terminal device in the foregoing method. The function may be implemented by hardware, or may be implemented by hardware executing corresponding software. The hardware or the software includes one or more modules corresponding to the function.

In embodiments of this application, the apparatus 800 in FIG. 8 may alternatively be a chip or a chip system, for example, a system on a chip (system on a chip, SoC).

FIG. 9 is a block diagram of a channel access apparatus 900 according to an embodiment of this application. The apparatus 900 includes a processor 901, a transceiver 902, and a memory 903. The processor 901, the transceiver 902, and the memory 903 communicate with each other through an internal connection path. The memory 903 is configured to store instructions. The processor 901 is configured to execute the instructions stored in the memory 903, to control the transceiver 902 to send a signal and/or receive a signal.

It should be understood that the apparatus 900 may be specifically the first access network device, the second access network device, or the terminal device in the foregoing embodiments, and may be configured to perform steps and/or procedures corresponding to the first access network device, the second access network device, or the terminal device in the foregoing method embodiments. Optionally, the memory 903 may include a read-only memory and a random access memory, and provide instructions and data to the processor. A part of the memory may further include a non-volatile random access memory. For example, the memory may further store information about a device type. The processor 901 may be configured to execute the instructions stored in the memory. When the processor 901 executes the instructions stored in the memory, the processor 901 is configured to perform steps and/or procedures in the foregoing method embodiments. The transceiver 902 may include a transmitter and a receiver. The transmitter may be configured to implement steps and/or procedures that correspond to the transceiver and that are used to perform a sending action. The receiver may be configured to implement steps and/or procedures that correspond to the transceiver and that are used to perform a receiving action.

It should be understood that in embodiments of this application, the processor may be a central processing unit (central processing unit, CPU), or the processor may be another general-purpose processor, a digital signal processor (DSP), an application-specific integrated circuit (ASIC), a field programmable gate array (FPGA) or another programmable logic device, a discrete gate or transistor logic device, a discrete hardware component, or the like. The general-purpose processor may be a microprocessor, or the processor may be any conventional processor, or the like.

In an implementation process, steps in the foregoing methods can be completed by using a hardware integrated logical circuit in the processor, or by using instructions in a form of software. The steps of the methods disclosed with reference to embodiments of this application may be directly performed and completed by a hardware processor, or may be performed and completed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory, and a processor reads instructions in the memory and completes the steps in the foregoing methods in combination with hardware of the processor. To avoid repetition, details are not described herein again.

This application further provides a computer-readable storage medium. The computer-readable storage medium is configured to store a computer program, and the computer program is configured to implement the method shown in the foregoing method embodiments.

This application further provides a computer program product. The computer program product includes a computer program (which may also be referred to as code or instructions). When the computer program is run on a computer, the computer may perform the method shown in the foregoing method embodiments.

A person of ordinary skill in the art may be aware that units and algorithm steps with reference to the examples described in embodiments disclosed in this specification can be implemented by electronic hardware or a combination of computer software and electronic hardware. Whether the functions are performed by hardware or software depends on specific applications and design constraint conditions of the technical solutions. A person skilled in the art may use different methods to implement the described functions for each specific application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the foregoing apparatus embodiments are merely examples. For example, division into the units is merely logical function division. During actual implementation, another division manner may be used. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application may be implemented in a form of software product. The computer software product is stored in a storage medium, and includes several instructions for instructing a computer device (which may be a personal computer, a server, or a network device) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
determining, by a first access network device, first information and second information, wherein the first information indicates to perform application layer measurement on a first service, and the second information indicates to report an identifier of the first service; and
sending, by the first access network device, the first information and the second information to a terminal device.

2. The method according to claim 1, wherein the method further comprises:
receiving, by the first access network device, a first application layer measurement result of the first service from the terminal device;
receiving, by the first access network device, a radio side measurement identifier from a second access network device, wherein the radio side measurement identifier is an identifier corresponding to radio side measurement associated with an access network device bearing the first service and the terminal device; and
sending, by the first access network device, the radio side measurement identifier and the first application layer measurement result to a server.

3. The method according to claim 1, wherein the method further comprises:
receiving, by the first access network device, the identifier of the first service from the terminal device; and
sending, by the first access network device, a radio side measurement identifier to a second access network device based on the identifier of the first service, wherein the radio side measurement identifier is an identifier corresponding to radio side measurement associated with an access network device bearing the first service and the terminal device.

4. The method according to claim 1, wherein the method further comprises:
receiving, by the first access network device, a first application layer measurement result of the first service and the identifier of the first service that are from the terminal device; and
sending, by the first access network device, a radio side measurement identifier and the first application layer measurement result to a server based on the identifier of the first service, wherein the radio side measurement identifier is an identifier corresponding to radio side measurement associated with an access network device bearing the first service and the terminal device.

5. The method according to claim 3 or 4, wherein if a data packet corresponding to the identifier of the first service is processed only by a radio link control RLC entity and a media access control MAC entity of the first access network device, the radio side measurement identifier is a first identifier corresponding to the radio side measurement associated with the first access network device and the terminal device.

6. The method according to claim 3 or 4, wherein if a data packet corresponding to the identifier of the first service is processed only by an RLC entity and a MAC entity of the second access network device, the radio side measurement identifier is a second identifier corresponding to radio side measurement associated with the second access network device and the terminal device.

7. The method according to claim 3 or 4, wherein if a data packet corresponding to the identifier of the first service is processed by an RLC entity of the first access network device, a MAC entity of the first access network device, an RLC entity of the second access network device, and a MAC entity of the second access network device, the radio side measurement identifier comprises a first identifier and a second identifier, the first identifier corresponds to the radio side measurement associated with the first access network device and the terminal device, and the second identifier corresponds to radio side measurement associated with the second access network device and the terminal device.

8. The method according to claim 6 or 7, wherein before the sending the radio side measurement identifier, the method further comprises:
sending, by the first access network device, a first request to the second access network device, wherein the first request is used to request the second identifier; and
receiving, by the first access network device, the second identifier from the second access network device.

9. The method according to claim 4, wherein the method further comprises:
sending, by the first access network device, a second request to a second access network device, wherein the second request is used to request to change a reporting node of an application layer measurement result to the second access network device, and the second request carries the radio side measurement identifier.

10. The method according to any one of claims 1 to 9, wherein the identifier of the first service comprises a protocol data unit PDU session identifier, or a PDU session identifier and a quality of service QoS flow identifier.

11. A communication method, wherein the method comprises:
receiving, by a terminal device, first information and second information from a first access network device, wherein the first information indicates to perform application layer measurement on a first service, and the second information indicates to report an identifier of the first service; and
sending, by the terminal device, a first application layer measurement result of the first service and the identifier of the first service.

12. The method according to claim 11, wherein the sending the first application layer measurement result of the first service and the identifier of the first service comprises:
sending, by the terminal device, the first application layer measurement result of the first service and the identifier of the first service to the first access network device, or sending the first application layer measurement result of the first service to the first access network device and sending the identifier of the first service to a second access network device.

13. The method according to claim 11 or 12, wherein the identifier of the first service comprises a protocol data unit PDU session identifier, or a PDU session identifier and a quality of service QoS flow identifier.

14. A communication apparatus, comprising a module configured to implement the method according to any one of claims 1 to 10, or comprising a module configured to implement the method according to any one of claims 11 to 13.

15. A communication apparatus, comprising a processor, wherein the processor is coupled to a memory, the memory stores computer-executable instructions, the processor executes the computer-executable instructions stored in the memory, and the processor is enabled to perform the method according to any one of claims 1 to 10, or perform the method according to any one of claims 11 to 13.

16. A computer-readable storage medium, configured to store a computer program, wherein the computer program comprises instructions for implementing the method according to any one of claims 1 to 10, or instructions for performing the method according to any one of claims 11 to 13.

17. A computer program product, wherein the computer program product comprises computer program code, and when the computer program code is run on a computer, the computer is enabled to implement the method according to any one of claims 1 to 10 or perform the method according to any one of claims 11 to 13.
